# EUROPEAN PATENT APPLICATION

(11) **EP 1 426 876 A1**
(43) Date of publication of application: **09.06.2004**
(21) Application number: 02258388.4
(22) Date of filing: 04.12.2002
(51) Int. Cl.: G06F 17/30

(54) **Geographical information system**

(71) Applicant: H.W.S.- Hardware Solution Limited, London EC4V 4DD (GB)
(72) Inventor: Soddu, Giuseppe, 00049 Velletri (IT)
(74) Representative: Piotrowicz, Pawel Jan Andrzej

(57) **Abstract**

A geographical information system includes a client computer (1) and a server computer (2) connected via a network (3). The server computer includes a geographic information database (27) which includes map data and georeference parameters. A user can generate multimedia personal information sheets, personal itineraries and personal maps using the map data and georeference parameters and store them in geographically referenced database 33. The user may also search for personal data (33), display their position, both on system maps or on personal maps and then, consult their multimedia relevant contents.

## Description

The present invention relates to a geographical information system and a method of providing a geographical information system.

Geographical Information Systems (GIS) are known which are used for receiving, storing, manipulating, analysing and displaying geographically referenced data.

Increasingly, GISs are accessible via the Internet. Such Internet-based systems allow a client to request a map from a GIS server and to display it. These systems normally permit a user to personalise the map, for example by changing colours of map features, varying font type of text and altering magnification and also by enabling and disabling predetermined informative layers. However, the user is limited to the extent he or she can personalise the map.

The present invention seeks to provide an improved geographical information system.

According to a first aspect of the present invention there is provided a method, in a geographical information system comprising a server computer and at least one client computer, the method comprising the server computer: providing data for a map, providing data for georeferencing the map data and transmitting the map data and the georeferencing data to a client computer and the client computer providing personal data for associating with the map, providing data for identifying a position to which the personal data is to be associated and calculating geographical coordinate data corresponding to the position.

According to a second aspect of the present invention there is provided a method, in a client computer in a geographical information system, the method comprising sending a request to a server computer, the request including data for identifying a geographical point or region, receiving, from the server computer, data for a map which includes the geographical point or region, receiving, from the server computer, data for georeferencing the map data, providing personal data for associating with the map, providing data for identifying a position to which the personal data is to be associated and calculating geographical coordinate data corresponding to the position.

This has the advantage that a user of a client computer may provide personal information belonging to or selected by them and thus personalise map data provided by the server computer.

The calculating of the geographical coordinate data may include calculating geographical coordinate data corresponding to the position using the georeferencing data. The method may further comprise the client computer storing the personal data and the corresponding geographical coordinate data. The providing of the identifying data may include identifying a point on the map or identifying a region defined by a plurality of points on the map. The calculating of the geographical coordinate data may include calculating respective geographical coordinate data corresponding to the point or each of the plurality of points. The providing of the identifying data may include receiving an address from a user or determining a position of a pointer on a display selected by a user.

The providing of the personal data may include providing text data, audio data, video data and/or graphic data or providing means for pointing to text data, means for pointing to audio data, means for pointing to video data and/or means for pointing to graphic data. The providing of the personal data may include providing one or more attributes in one or more corresponding data fields. The providing of the personal data may include providing data for a personal map or means for pointing to map data.

The method may comprise the client computer importing at least some of the personal data from an external archive.

The method may comprise comprising the client computer importing the position identifying data instead of providing the position identifying data or importing the geographical coordinate data instead of providing the position identifying data and determining the geographical coordinate data.

The method may further comprise the client computer displaying the map and an icon on the map at the position corresponding to the geographical coordinate data.

According to a third aspect of the present invention there is provided a method, in a client computer in a geographical information system, the method comprising sending a request to a server computer, the request including data for identifying a geographical point or region, receiving, from the server computer, data for a map which includes the geographical point or region, receiving data, from the server computer, for georeferencing the map data, retrieving personal data including data for displaying an icon and geographical coordinate data , displaying the map and the icon on the map at the position corresponding to the geographical coordinate data.

The method may further comprise the client computer receiving an instruction to select the icon and displaying at least part of the user data.

The method may comprise searching for data items included in one or more sets of user data and retrieving a set of user data if the set includes the data item.

The method may comprise the client computer providing an itinerary comprising receiving at least two sets of geographical coordinate data from a positioning device, sending a request to a server computer, the request including the at least two sets of geographical coordinate data, receiving, from the server computer, data for a map which includes points corresponding to the at least two sets of geographical coordinate data, receiving, from the server computer, data for georeferencing the map data , calculating at least two positions on the map corresponding to the at least two sets of geographical coordinates; and providing at least two sets of personal data for associating with respective positions on the map.

According to a fourth aspect of the present invention there is provided a method, in a client computer in a geographical information system, the method comprising providing an itinerary comprising receiving at least two sets of geographical coordinate data from a positioning device, sending a request to a server computer, the request including the at least two sets of geographical coordinate data, receiving, from the server computer, data for a map which includes points corresponding to the at least two sets of geographical coordinate data , receiving, from the server computer , data for georeferencing the map data , calculating at least two positions on the map corresponding to the at least two sets of geographical coordinates; and providing at least two sets of personal data for associating with respective positions on the map.

The method may comprise reviewing an itinerary comprising retrieving at least two sets of personal data for associating with respective points along the itinerary, each set of personal data including respective data for displaying an icon and respective geographical coordinate data, sending a request to a server computer, the request including geographical coordinate data , receiving, from the server computer , data for a map which includes points corresponding to the geographical coordinate data, receiving, from the server computer, data for georeferencing the map data ; and calculating at least two positions on the map corresponding to the at least two sets of geographical coordinates.

According to a fifth aspect of the present invention there is provided a method, in a client computer in a geographical information system, the method comprising reviewing an itinerary comprising retrieving at least two sets of personal data for associating with respective points along the itinerary, each set of personal data including respective data for displaying an icon and respective geographical coordinate data , sending a request to a server computer, the request including geographical coordinate data , receiving, from the server computer, data for a map which includes points corresponding to the geographical coordinate data, receiving, from the server computer, data for georeferencing the map data, and calculating at least two positions on the map corresponding to the at least two sets of geographical coordinates.

The method may further comprise displaying the itinerary including the at least two positions on the map corresponding to the itinerary.

The method may comprise providing personal data for associating with a map, the personal data including data for a personal map, sending a request for a map to a server computer, receiving, from the server computer, data for the map, receiving, from the server computer, data for georeferencing the map data, receiving user instructions for defining a region using a plurality of points on the map, calculating a plurality of sets of geographical coordinate data corresponding to respective points on the map and assigning the plurality of sets of geographical coordinate data to corresponding points of the personal map.

According to a sixth aspect of the present invention there is provided a method, in a client computer in a geographical information system, the method comprising providing personal data for associating with a map, the personal data including data for a personal map, sending a request for a map to a server computer, receiving, from the server computer, data for the map, receiving, from the server computer, data for georeferencing the map data, receiving user instructions for defining a region using a plurality of points on the map, calculating a plurality of sets of geographical coordinate data corresponding to respective points on the map and assigning the plurality of sets of geographical coordinate data to corresponding points of the personal map.

The method may comprise retrieving personal data for associating with a map, the personal data including data for a personal map and a plurality of sets of geographical coordinate data assigned to the personal map, sending a request for a map to a server computer, receiving, from the server computer, data for the map, receiving, from the server computer, data for georeferencing the map data, calculating a plurality of sets of coordinates on the map corresponding to the plurality of sets of geographical coordinate data, and displaying the personal map on the map at the calculated coordinates.

According to a seventh aspect of the present invention there is provided a method, in a client computer in a geographical information system, or a method according to any preceding claim, the method comprising retrieving personal data for associating with a map, the personal data including data for a personal map and a plurality of sets of geographical coordinate data assigned to the personal map, sending a request for a map to a server computer, receiving, from the server computer, data for the map, receiving, from the server computer, data for georeferencing the map data , calculating a plurality of sets of coordinates on the map corresponding to the plurality of sets of geographical coordinate data ; and displaying the personal map on the map at the calculated coordinates.

The method may comprises receiving a request for data from a mobile communications device, determining whether the data is stored at the client computer; and if the data is stored at the client computer, then retrieving the data and transmitting the data to mobile communications device, if the data is not stored at the client computer, transmitting the request to a server computer, receiving the data from the server computer and transmitting the data to the mobile communications device.

According to an eighth aspect of the present invention there is provided a method, in a client computer in a geographical information system, the method comprising receiving a request for data from a mobile communications device, determining whether the data is stored at the client computer; and if the data is stored at the client computer, then retrieving the data and transmitting the data to mobile communications device, if the data is not stored at the client computer, transmitting the request to a server computer, receiving the data from the server computer and transmitting the data to the mobile communications device.

According to a ninth aspect of the present invention there is provided a method, in a server computer in a geographical information system, the method comprising receiving a request from a client computer, examining the request so as to identify a geographic point or region, providing data for a map in respect of the geographical point or region, providing data for georeferencing the map data and transmitting the map data and the georeferencing data from the server computer to the client computer.

According to a tenth aspect of the present invention there is provided a computer program including instructions for carrying out the method or a computer program which, when loaded and executed by a data processing apparatus causes the data processing apparatus to perform the method.

According to an eleventh aspect of the present invention there is provided apparatus configured to perform the method.

According to a twelfth aspect of the present invention there is provided a geographical information system comprising a server computer and at least one client computer, the server computer being configured to provide data for a map and to provide data for georeferencing the map data and to transmit the map data and the georeferencing data to a client computer; and the client computer being configured to provide personal data for associating with the map and to provide data for identifying a position to which the associating data is to be associated with the map and to determine geographical coordinate data corresponding to the position.

According to a thirteenth aspect of the present invention there is provided apparatus comprising means for preparing a request, the request including data for identifying a geographical point or region, means for transmitting the request to a server computer, means for receiving from the server computer, data for a map which includes the geographical point or region and data for georeferencing the map data, means providing personal data for associating with the map, means for providing data for identifying a position to which the personal data is to be associated and means for calculating geographical coordinate data corresponding to the position.

According to a fourteenth aspect of the present invention there is provided a record medium embodying the computer program

According to a fifteenth aspect of the present invention there is provided a computer memory storing the computer program.

According to a sixteenth aspect of the present invention there is provided a read-only memory embodying the computer program.

According to a seventeenth aspect of the present invention there is provided a carrier signal carrying the computer program.

Embodiments of the present invention will now be described by way of example with reference to the accompanying drawings in which:
Figure 1 shows a geographical information system including a client computer and a server computer;
Figure 2 is a schematic diagram of a client computer;
Figure 3 shows a plurality of server computers;
Figure 4 shows a mobile communications network message centre via which messages are sent from a client computer to a server computer;
Figure 5 is a schematic diagram of a server computer;
Figure 6 shows functional elements of the geographical information system shown in Figure 1;
Figure 7 shows means for managing geographic information in more detail;
Figure 8 shows data stored in a geographical information database provided by the server computer of Figure 6;
Figure 9 shows map of a relatively large area comprising a plurality of maps of relatively small areas;
Figure 10 shows geographical coordinates used for georeferencing;
Figure 11 shows hierarchical organisation of data stored in an auxiliary information database provided by a server computer of Figure 6;
Figure 12 shows data tables stored in a geographically referenced information database provided by the client computer of Figure 6;
Figure 13 shows a set of personal category data stored in the geographically referenced information database shown in Figure 12;
Figure 14 shows a set of personal section data stored in the geographically referenced information database shown in Figure 12;
Figure 15 shows a set of personal sheet data for a static entity stored in the geographically referenced information database shown in Figure 12;
Figure 16 shows a set of personal sheet data for a first dynamic entity stored in the geographically referenced information database shown in Figure 12;
Figure 17 shows a set of personal sheet data for a second dynamic entity stored in the geographically referenced information database shown in Figure 12;
Figure 18 shows a set of personal itinerary data stored in the geographically referenced information database shown in Figure 12;
Figure 19 shows a set of personal map data stored in the geographically referenced information database shown in Figure 12;
Figure 20 shows a process of generating map data;
Figure 21 is a process flow diagram of generating map data;
Figure 22a shows a request for map data, while navigating a system map;
Figure 22b shows a response to a request for map data, while navigating a system map;
Figure 23a shows a request for a search for an address, while navigating a system map;
Figure 23b shows a response to request for a search for an address, while navigating a system map;
Figure 24a shows a request for a search for an entity;
Figure 24b shows a response to request for a search for a an entity;
Figure 25a shows a request for a search of an itinerary;
Figure 25b shows a response to a request for a search ofan itinerary;
Figure 26a illustrates a request for a search of a map based on geographic coordinates;
Figure 26b illustrates a response to a request for a search of a map based on geographic coordinates;
Figure 27 illustrates a method of georeferencing;
Figure 28 illustrates a method of mapping;
Figure 29 illustrates a client computer browser showing a two dimensional map;
Figure 30 illustrates a client computer browser showing an axonometric map;
Figure 31 illustrates a client computer browser showing an axonometric artistic map;
Figure 32 illustrates defining personal categories and sections;
Figure 33 is a process flow diagram of a method of creating a personal multimedia information sheet;
Figure 34 illustrates creating a personal multimedia information sheet;
Figure 35 shows a client computer and a mobile communications device to which is connected a GPS device;
Figure 36 is a process flow diagram of a method of searching and mapping a personal multimedia information sheet;
Figure 37 shows displaying a personal multimedia information sheet;
Figure 38 is a process flow diagram of a method of creating a personal multimedia itinerary;
Figure 39 is a process flow diagram of a method of searching and mapping a personal itinerary;
Figure 40 shows mapping a personal multimedia itinerary;
Figure 41 shows selecting a personal multimedia itinerary;
Figure 42 shows selecting a point along a personal multimedia itinerary;
Figure 43 is a process flow diagram of a method of creating a personal multimedia map;
Figures 44a to 44d illustrate incorporation of a personal multimedia map into a system map;
Figure 45 shows illustrate incorporation of a personal multimedia map into a system map;
Figure 46 is a process flow diagram of a method of searching and mapping a georeferenced personal map;
Figure 47 is a process flow diagram of a method of managing queries received by a client computer from a mobile device and
Figure 48 shows a client computer and a mobile communication device.

### Geographical information system

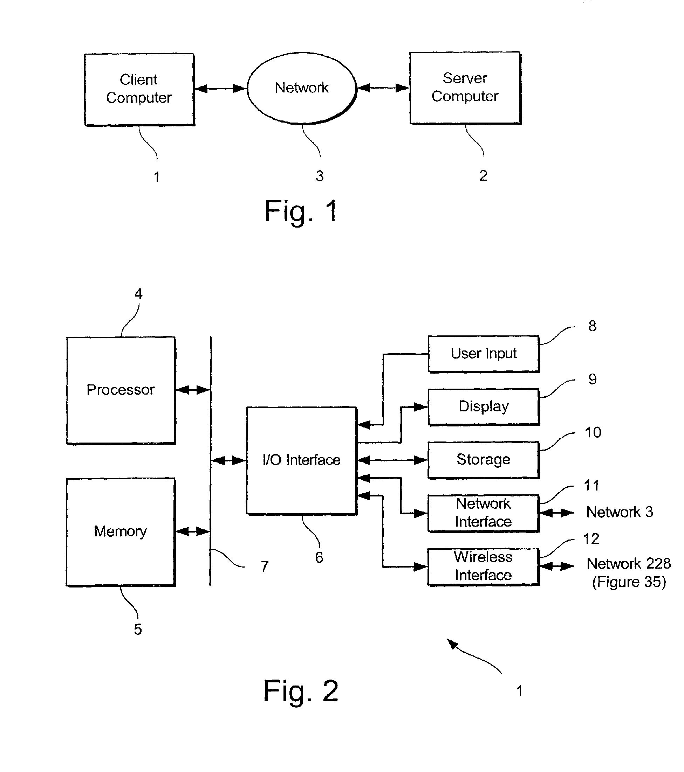

Referring to Figure 1, a personal geographical information system (GIS) is shown which comprises a client computer 1 and a server computer 2 connected via a network 3.

More than one client computer (not shown) may be connected to the server computer 2. Furthermore, the client computers (not shown) may be simultaneously connected to and managed by the server computer 2.

The network 3 may include a local area network (not shown), a metropolitan area network (MAN) and/or a wide area network (not shown) each of may be wired or wireless. The network 3 may include a plurality of interconnected networks (not shown), such as the Internet. The network 3 may accommodate narrowband and/or broadband connections.

The network 3 may include a public switched telephone network (PSTN) or an integrated services data network (ISDN). The network 3 may comprise a public land mobile network (PLMN), for example a second generation (2G) mobile telephone network, such as the Global System for Mobile Communication (GSM) network, an enhanced second generation (2.5G) mobile telephone network, such as Global Packet Radio System (GPRS) network, or third generation (3G) mobile telephone network, such as Universal Mobile Telecommunications System (UMTS) network. The network 3 may include other wireless networks such as personal area networks.

Referring to Figure 2, the client computer 1 includes a processor 4, memory 5 and an input/output (I/O) interface 6 which are connected via a bus 7. The I/O interface 6 is connected to a user input 8, such as a keyboard, mouse, touch screen or voice input device, a display 9, storage 10, network interface 11 and wireless interface 12. Storage 10 may be a hard disc drive, optical drive or solid state nonvolatile memory, such as flash memory.

The network interface 11 may include a modem for connection by a telephone line to an Internet Service Provider (ISP) (not shown). The network interface 11 may include a network interface card (not shown) for connection to a local area network (not shown).

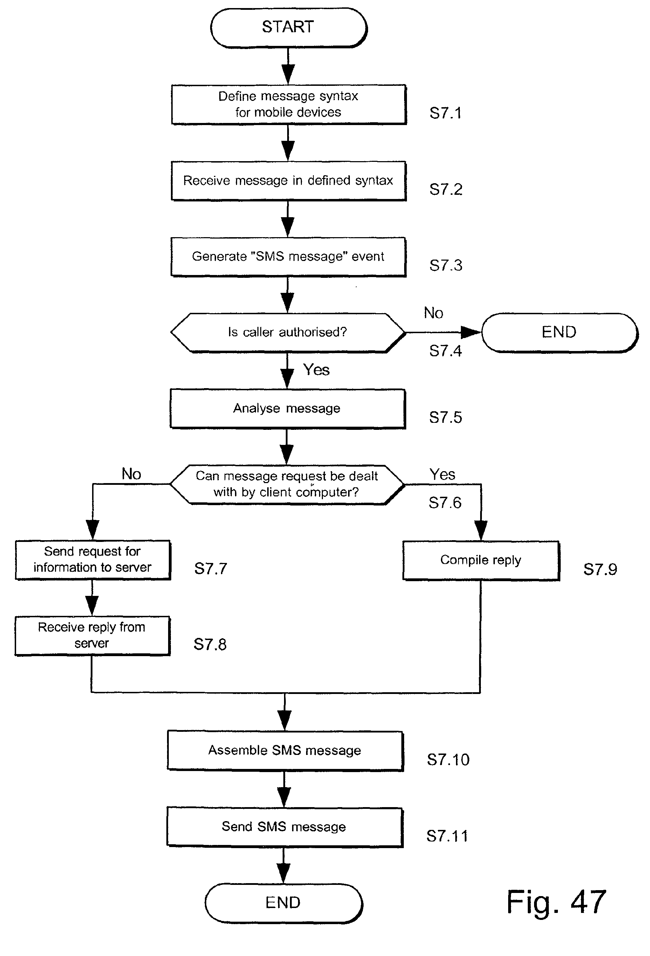

The wireless interface 12 may be a wireless modem for communicating with a mobile telephone (Figure 47) via a PLMN such a Global System for Mobile Communication (GSM) network 195 (Figure47). The wireless interface 11 may be omitted.

The I/O interface 6 may be connected to other peripheral devices such as a printer for printing paper copies of personal maps and related or linked data.

In this example, the client computer 1 is desk-top personal computer. Alternatively, the client computer 1 may be a lap-top personal computer.

The client computer 1 may be pocket personal computer, which may be referred to as a personal data assistant (PDA), or mobile communications device such as a GSM handset, a wireless application protocol (WAP) enabled handset, a GPRS handset or a UMTS handset. The client computer 1 may be integrated into a vehicle.

Different client computers, which may be of different types, may be connected via the same or different networks to the server computer 2. For example, one or more desk-top personal computers may be connected via the Internet to the server computer 2 and one or more GSM handsets may be also connected via a GSM network to the server computer 2. Thus, a personal GIS is being provided for each client computer.

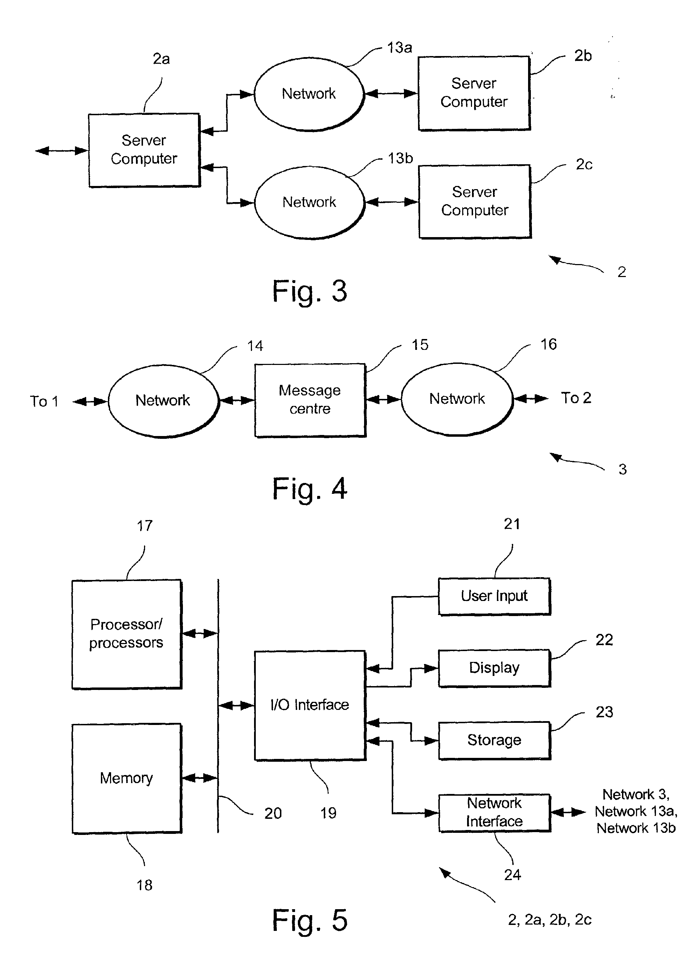

Referring to Figure 3, a plurality of server computers 2a, 2b, 2c may be used. For example a first server computer 2a may be connected to the client computer 1 (Figure 1) via the network 3 (Figure 1). The first server computer 2a may share processing or database functionality with a second server computer 2b. The first and second server computers 2a, 2b may be located at one site and connected via a local area network 13a. The first server computer 2a may share processing or database functionality with a third server computer 2c. The first and third server computers 2a, 2c may be located at different sites and connected via a wide area network 13b. The first server computer 2a may share processing or database functionality with further server computers (not shown).

As explained earlier, different networks may be used. For example, the client 1 may send and receive data via a PSTN. Another client (not shown) may send and receive data via a PLMN, for example in the form of wireless application protocol (WAP) messages. Thus, a plurality of server computers (not shown) may be provided, each of which is configured to send and receive data according to a respective type of network. For example, one server computer may run a web server and another computer may run a WAP server. The plurality of computers may be provided at a service centre.

Referring to Figure 4, the client computer 1 and the server computer 2 may be connected via a mobile communications network 14, a mobile communications network message centre 15 for managing message services and a network 16. This permits client computer 1 in the form of a mobile communications handset to send messages to the mobile communications network message centre 15 for forwarding to the server computer 2.

For example, the mobile communications network 14 may be a GSM network and the mobile communications network message centre 15 may be a short message service centre (SMSC). Additionally or alternatively, the mobile communications network 14 may be a GPRS network and the mobile communications network message centre 15 may be a multimedia message service centre (MMSC). Additionally or alternatively the mobile communications network 14 may be a UMTS network and the mobile communications network message centre 15 may be a UMTS message service centre.

The network 16 may be digital direct line. Alternatively, it may be public or private data network.

Referring to Figure 5, the server computer 2 includes a processor 17, memory 18 and an input/output (I/O) interface 19 which are connected via a bus 20. The I/O interface 19 is connected to a user input 21, a display 22, storage 23 and network interface 24. Storage 23 may include one or more hard disc drives and/or one or more optical disc drives.

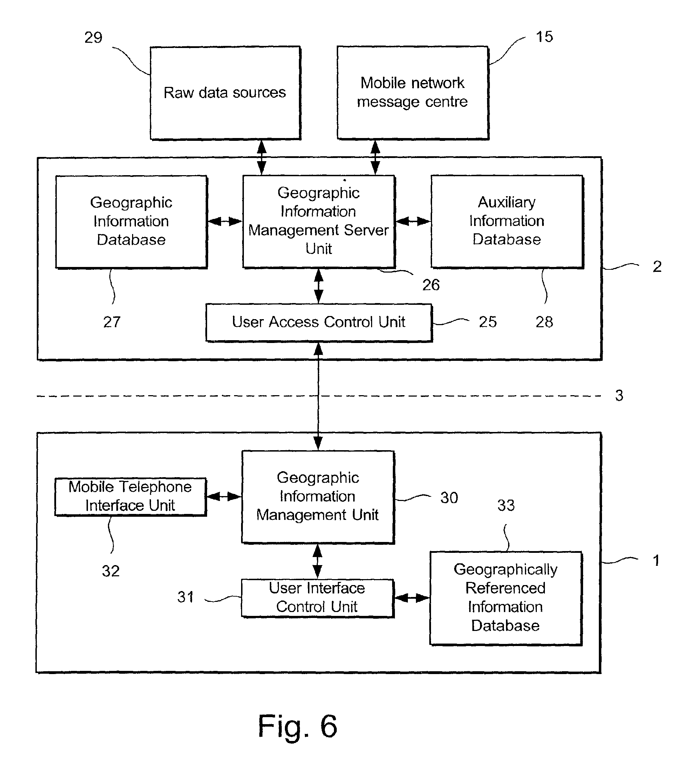

Referring to Figure 6, the server computer 2 builds, stores and manages georeferenced data. A user employs the client computer 1 to request and receive georeferenced data from the server computer 2. The user also employs the client computer 1 to create his or her own georeferenced data and to integrate their own georeferenced data into the georeferenced data received from the server computer 2.

Functions of the client and server computers 1, 2 will now be described in more detail:

### Server Computer 2

The server computer 2 provides means for controlling user access 25, means for managing databases 26, a database for geographical information 27 and, optionally, a database for auxiliary information 28. If the server computer 2 is used to build the geographical and auxiliary databases 27, 28, then it is provided with raw data sources 29.

### Means for controlling user access 25

Referring also to Figure 5, a computer program (not shown) is loaded into memory 18 of the server computer 2 and is executed by the processor 17 so as to cause it to provide means for controlling user access 25.

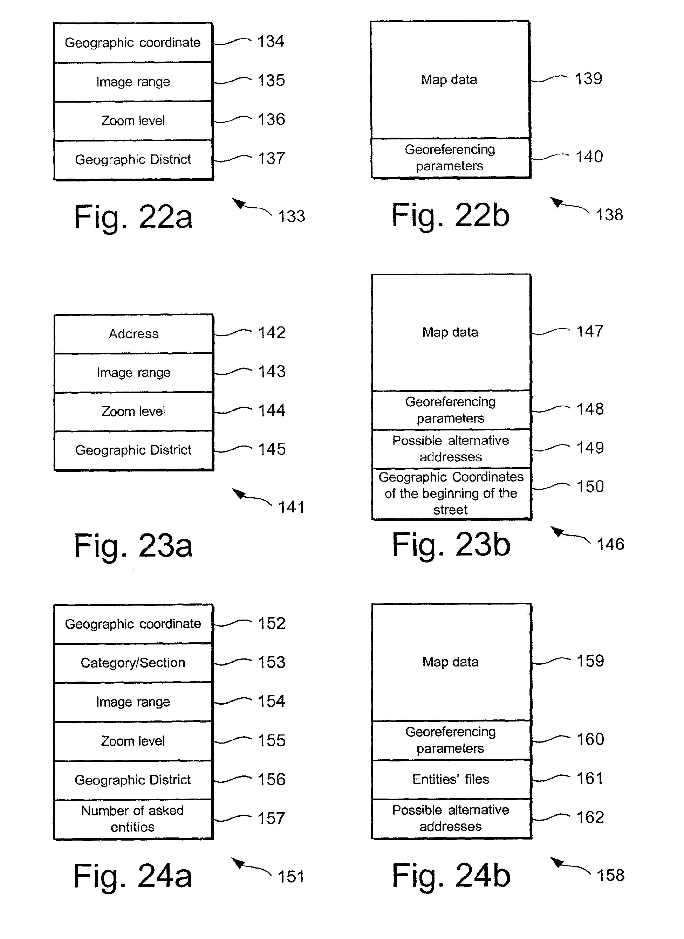

The means for controlling user access 25 receives requests 133, 141, 151, 163, 173 (Figures 22a, 23a, 24a, 25a, 26a) from the client computer 1, processes them and forwards the results to the means for managing databases 26 for further processing. The means for controlling user access 25 also receives replies 138, 146, 158, 168, 177 (Figures 22b, 23b, 24b, 25b, 26b) from the means for managing databases 26, processes them and forwards the replies to the client computer 1.

The means for controlling user access 25 identifies the type of client computer 1 accessing the server computer 2 and its corresponding characteristics. Characteristics may include connection speed, size of display and availability/number of displayable colours. The means for controlling user access 25 also identifies syntax used by the client computer 1. For example, a desk-top computer may use an HTML browser, while a GSM handset may use a WAP browser. It can also identify whether the client computer 1 has the necessary software for providing client-side portion of a personal GIS, such as software for providing means for managing geographic information 30,

Processing requests 133, 141, 151, 163, 173 (Figures 22a, 23a, 24a, 25a, 26a) and replies 138, 146, 158, 168, 177 (Figures 22b, 23b, 24b, 25b, 26b) mainly comprises translating a syntax or message structure understood by the means for managing databases 26 into another syntax or message structure understood by the means for managing geographic information 30 and *vice versa*.

In particular, processing includes converting a request from a client computer 1 into a message, referred to as an "interrogation string" (not shown), with a predefined format.

Similarly, processing includes converting a message (not shown), referred to as a "reply string", from the means for managing databases 26 into a device-specific reply for the client computer 1.

This has the advantage that the server computer 2 can process different types of queries from different types of clients and so allow a single server computer 2 to be used.

### Means for managing databases 26

The computer program (not shown) causes the processor 17 to provide means for managing databases 26. The means for managing databases 26 is used to search and retrieve data from the geographical and auxiliary information databases 27, 28. It is also used to perform calculations and to process data. This will be explained in more detail later.

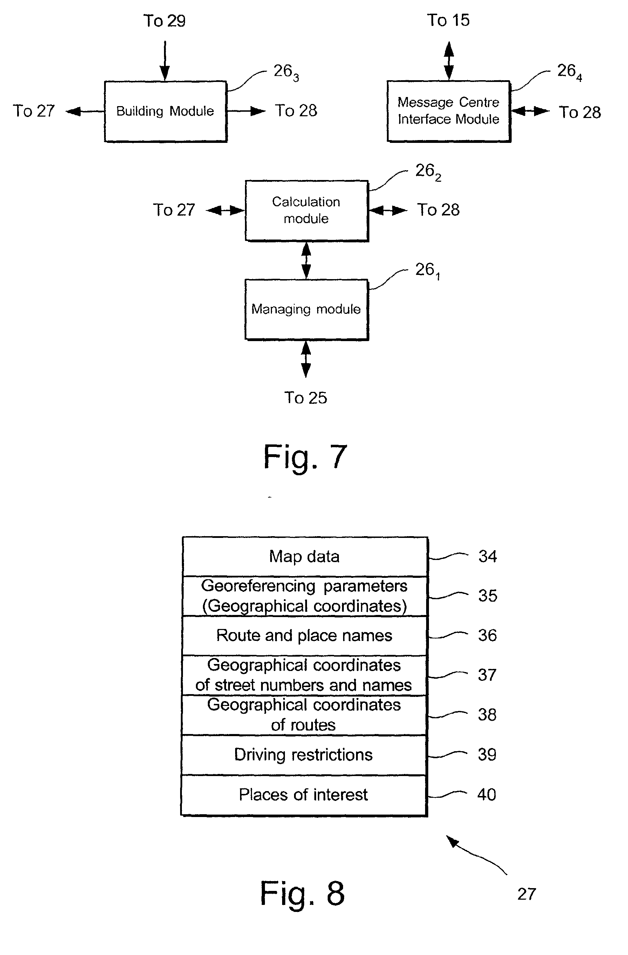

Referring to Figure 7, the means for managing databases 26 includes means for managing interrogation and reply strings 26₁ and means for processing 26₂, which are herein referred to as management module and calculation modules respectively. The means for managing databases 26 may also include means for building information databases 26₃ and means for interfacing with message centres 26₄, herein referred to as building module and message centre interface module respectively.

### Managing module 26₁

The managing module 26₁ provides an input/output interface with the means for controlling user access 25. It receives an interrogation string (not shown) and returns a corresponding reply string (not shown). Communication between the managing module 26₁ and the means for controlling user access 25 takes place through a TCP-IP socket connection. Each socket connection is dynamic. In other words, a new connection is created and destroyed for each interrogation. The managing module 26, manages interrogation string queues according to a predefined order, for example first in/ first out (FIFO).

The managing module 26, provides an input/output interface with one or more calculation modules 26₂. Communication between the managing module 26₁ and each calculation module 26₂ takes place through a TCP-IP socket connection. Each socket connection is usually permanent.

The managing module 26₁ performs several functions in relation to the calculation modules 26₂. Each calculation module 26₂ announces to the managing module 26₁ that it is available. Thus, the managing module 26₁ draws up a list of available calculation modules 26₂. The managing module 26₁ continually monitors activity and performance of each calculation module 26₂. This may include, for example monitoring calculation module reply time. The managing modules 26₁ dynamically routes interrogation strings (not shown) to active calculation modules 26₂. The managing module 26₁ also performs recovery if a calculation module 26₂ crashes or if a fault develops. For example, managing module 26₁ can route the interrogation string (not shown) from a crashed or defective calculation module 26₂ to a different active calculation module 26₂ or to a new calculation module 26₂.

### Calculation modules 26₂

A plurality of calculation modules 26₂ may be used. Each calculation module 26₂ can be used to process queries in parallel. A calculation module's capacity is equal to the thread number of its configuration, which depends on the available hardware capacity.

At start up, each calculation module 26₂ notifies the managing module 26₁ of its availability and specifies a number of threads it can handle. The managing module 26₁ allocates a unique ID to each calculation module 26₂, and places the calculation module 26₂ in a list of active calculation modules 26₂.

Each calculation module 26₂ can perform several functions and processes including providing an input/output interface with the managing module 26₁, searching the geographical and auxiliary information databases 27, 28 and dynamically calculating georeferencing parameters in relation to map data requested by a client. Processes may also include dynamically translating map data from an axonometric graphic format to WAP graphic format for a WAP client and performing calculations such as finding and navigating routes and calculating distances along at part of a route. Processes may also include compiling a reply string and possible associated files and mapping information found in the auxiliary information database 27 onto system maps found in the geographic information database 28.

### Building module 26₃

The building module 26₃ allows a server operator (not shown) to create system maps and build the geographic and auxiliary databases 27, 28. This is usually performed off-line. This is described in more detail later.

### Message centre interface module 26₄

The message centre interface module 26₄ allows requests and replies to be exchanged with the mobile telephone network message centre 15.

### Geographical information database 27

Referring to Figure 8, the geographical information database 27 comprises a multilayer relational database. In this example, the database 27 is held in storage 23 (Figure 5).

The geographical information database 27 includes map data 34 and geographical coordinates 35 for georeferencing. The geographical information database 27 may also include route and place names 36, geographical coordinates 37 for each of a plurality of locations specified by a street number and street name, geographical coordinates 38 for streets, roads and other routes and their intersections and information 39 on driving restrictions and information 40 on places of interest.

Preferably, the map data 34 is in the form of raster data and may be stored as GIF, JPEG or BMP files. In this example, the map data 34 represents physical surface features such as roads, rivers, buildings and other structures and areas. In other words, the map data 34 represents a topographic map. The map data 34 may also include text and graphics for describing map features, such as text indicating street names.

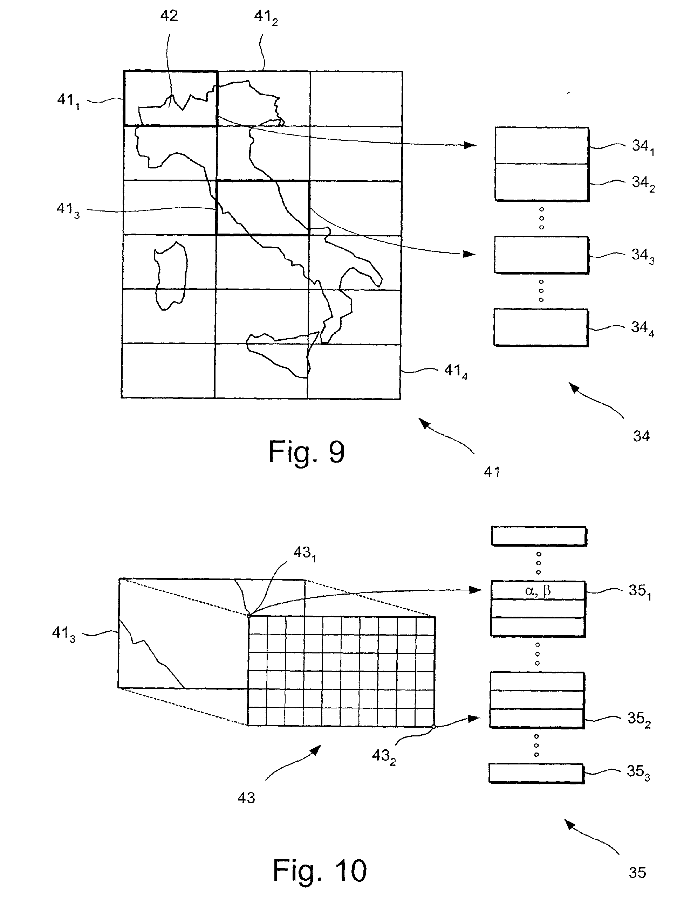

Referring also to Figure 9, the map data 34 relates to a map 41 of a geographic region 42, such as a country, for instance Italy. However, the map data 34 may relate to smaller regions, such as provinces, or to larger regions, such as continents. The map data 34 is divided into sets of map data 34₁, 34₂, 34₃, 34₄, each set of map data 34₁, 34₂, 34₃, 34₄ relating to smaller maps 41₁, 41₂, 41₃, 41₄, also referred to as elementary maps. Sets of map data 34₁, 34₂, 34₃, 34₄ may be further sub-divided. The map data may include one or more graphical representations, such as two-dimensional, axonometric and graphical.

The geographical information database 27 includes geographical coordinates 35 which are used for georeferencing and are herein referred to as "georeferencing data" or "georeferencing parameters". The georeferencing parameters 35 are used to reference the map data 34 and other data to locations on the surface of the earth. The georeferencing parameters 35 are in the form vector data and include a code for identifying a projection model and geographical coordinates corresponding to map data 29. For example, a plan model (P) and/or a Lambert conic model (L) may be used. Preferably, a plan model is used for small areas, for example covering towns and cities, and a Lambert model is used for larger areas, for example covering principalities and countries. The geographical coordinates are expressed in terms of latitude and longitude.

Referring to Figure 10, georeferencing parameters 35 comprise a plurality of pairs of coordinates 35₁, 35₂, 35₃ which correspond to map grid coordinates 43. For example, a first pair of coordinates 35₁ corresponds to a grid coordinate 43₁ of the top left corner of a set of map data 34₃ and a second pair of coordinates 35₂ corresponds to a grid coordinate 43₂ of the bottom right corner of the set of map data 34₃. Preferably, georeferencing parameters 35 are defined in latitude and longitude, for example degrees, minutes and seconds East and degrees, minutes and seconds North respectively. Preferably, a World Geodetic System 1984 (WGS-84) positioning system is used.

When map data 34 is retrieved from the geographical information database 27 for transmission to the client computer 1 (Figure 1), georeferencing parameters 35 are dynamically calculated and transmitted to permit georeferencing of the map data 34. The georeferencing parameters 35 include a code for identifying the projection model, such as "P" for plan or "L" for Lambert, and a plurality of geographic coordinates.

For the plan model, geographical coordinates of any point within a map may be determined if geographical coordinates of two or more points within the map are provided. Preferably, one point is the centre of the map and another point is a corner of the map.

For the Lambert model, geographical coordinates of any point within a map may be determined if geographical coordinates of four points within the map are provided, preferably the corners of the map, and also a position of an apex of a cone used to define the cartographic representation is supplied.

Thus, enough georeferencing parameters 35 are selected and transmitted to allow georeferencing any point included within the map. Nevertheless, more than enough georeferencing parameters 35 may be selected and transmitted.

Referring again to Figure 8, the geographical information database 27 may include other types of data in the form of raster, vector or text data. Text data may be in TXT or RTF formats.

In this example, the geographical information database 27 includes place and street names 36 listing names of places (such as "Rome") and streets (for example "Quattro Novembre, Via"). The geographical information database 27 also includes geographical coordinates 37 for each of a plurality of locations specified by a street number and street name. The geographical information database 27 also includes geographical coordinates 38 for streets, roads and other routes and their intersections. For example, the geographical coordinates 38 may include geographical coordinates of a beginning and end of a route and also intermediate points. These intermediate points may be regularly spaced or placed whenever a route changes direction. The intermediate points include places where routes intersect or join.

In this example, the geographical information database 27 also includes driving restriction information 39 and places of interest 40. For example, places of interest 35 may include names of hospitals, universities and parks.

The geographical information database 27 may store raster data in different formats including two-dimensional, axonometric and/or artistic formats. A two-dimensional axonometric format is suitable for displaying maps on small screens. The geographical information database 27 may store raster data as a bitmap for conversion by the means for managing databases 26 into Wireless Application Protocol bitmap (WBMP) format which is suitable for a mobile telephone or personal data assistant.

Data included in the geographical information database 27 is georeferenced, in particular locations specified by a street number and street name.

The map data 29 are formatted such that each set of map data has the same size, i.e. the same number of pixels.

### Auxiliary information database 28

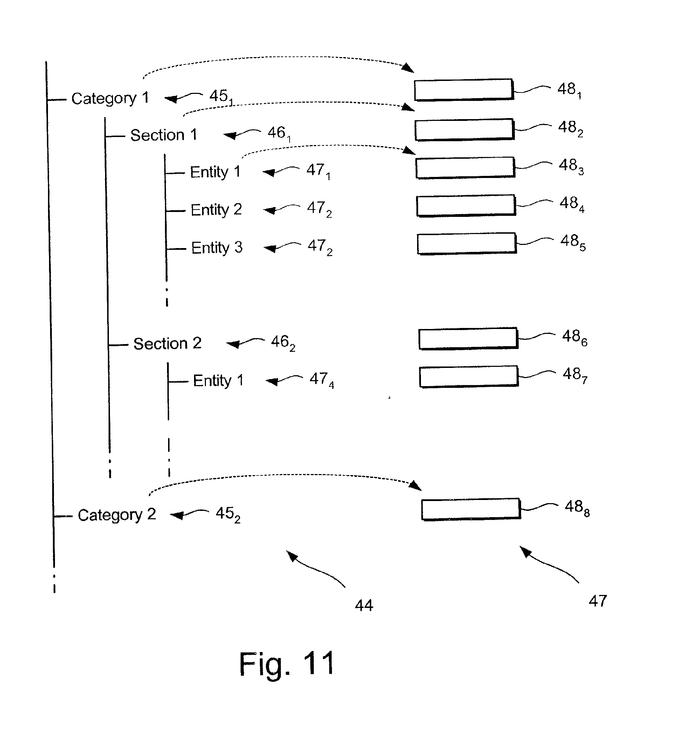

Referring to Figure 11, the auxiliary information database 28 includes a hierarchically-organised multimedia data structure 44. In this example, the auxiliary database 28 is held in storage 23 (Figure 5). The auxiliary information database 28 may be omitted.

The auxiliary information database 28 includes categories 45₁, 45₂, which are divided into sections 46₁, 46₂ which may comprise entities 47₁, 47₂, 47₃, 37₄. For example, a first category 45₁ may be "Hotels", a first section 46₁ may be "Five star" and a first entity 47₁ within that section may be a "Hilton". A second entity 47₂ may be another "Hilton" and a third entity 47₃ may be a "Sheraton". The second category 45₂ may be "Restaurants". Further categories (not shown) may be included, with each category being divided into suitable sections.

Sets of data 48₁, 48₂, 48₃, 48₄, 48₅, 48₆, 48₇, may be associated with each respective category 45₁ 45₂, each respective section 46₁, 46₂ and each respective entity 47₁, 47₂, 47₃, 47₄.

Each set of data 48₁, 48₂, 48₃, 48₄, 48₅, 48₆, 48₇ may include text, video, audio, graphic and other types of multimedia data.
As will be explained in more detail later, the client computer 1 may request information from the geographical information database 27 (Figure 6) and the auxiliary information database 28. For example, a user may search for five star hotels.

Notwithstanding the above, the auxiliary information database 28 may be omitted in which case a user is limited to requesting information from the geographical information database 27 (Figure 6).

### Client Computer 1

Referring again to Figure 6, the client computer 1 provides means for managing geographic information 30, means for controlling user interface 31, means for interfacing a mobile telephone 32 and a database for geographically referenced information 33. The client computer 1 need not be provided with the means for interfacing a mobile telephone 32.

### Means for managing geographic information 30

Referring also to Figure 2, a computer program (not shown) is loaded into memory 5 of the client computer 1 and is executed by the processor 4 so as to cause it to provide means for managing geographic information 30.

The means for managing geographic information 30 receives queries from the means for controlling user interface 31, establishes a connection with the server computer 2, prepares and transmits queries 133, 141, 151, 163, 173 (Figures 22a, 23a, 24a, 25a, 26a) and receives corresponding replies138, 146, 158, 168, 177 (Figures 22b, 23b, 24b, 25b, 26b). Examples of queries and corresponding replies are described in more detail later.

The means for managing geographic information 30 receives data from the means for controlling user interface 31 and performs georeferencing and mapping of data. Georeferencing and mapping of data is described in more detail later.

### Means for controlling user interface 31

Referring still to Figures 2 and 6, a computer program causes the processor 4 to provide means for controlling user interface 31.

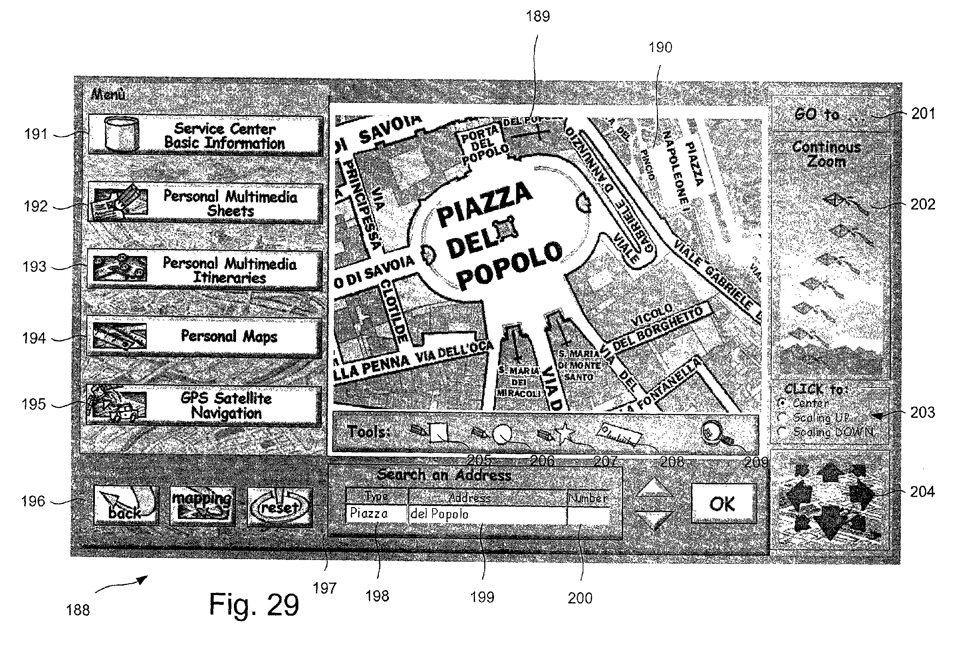

The means for controlling user interface 31 provides the user, through the display 9, with a browser 188 (Figure 29). It also receives from the user, via the user input 8, instructions to retrieve information from the geographical and auxiliary databases 27, 28 at the server computer 2, to search these databases 27, 28, and to provide maps for displaying to the user.

### Means for interfacing a mobile telephone 32

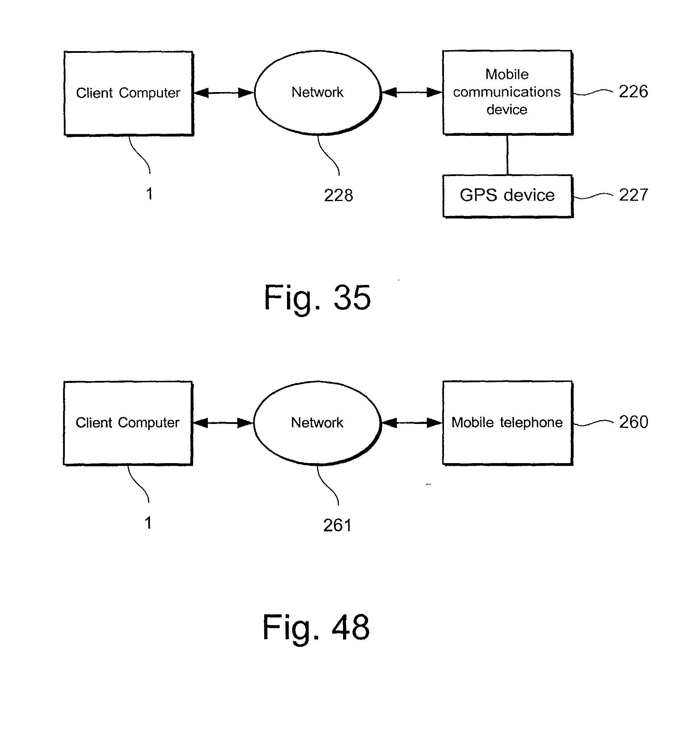

A computer program causes the processor 4 to provide, together with the wireless interface 12, the means for interfacing a mobile telephone 32. The means for interfacing the mobile telephone 32 permits the client computer 1 to receive queries from mobile communications devices 226, 260 (Figures 35 & 48) such as mobile telephones or devices which include a mobile telephone transceiver, such as an vehicular on-board computer, and to which is connected a Global Positioning System (GPS) receiver 227 (Figure 35). The means for interfacing the mobile telephone 32 can deal with low-level operations managing serial communications and GSM model AT commands.

### Geographically referenced information database 33

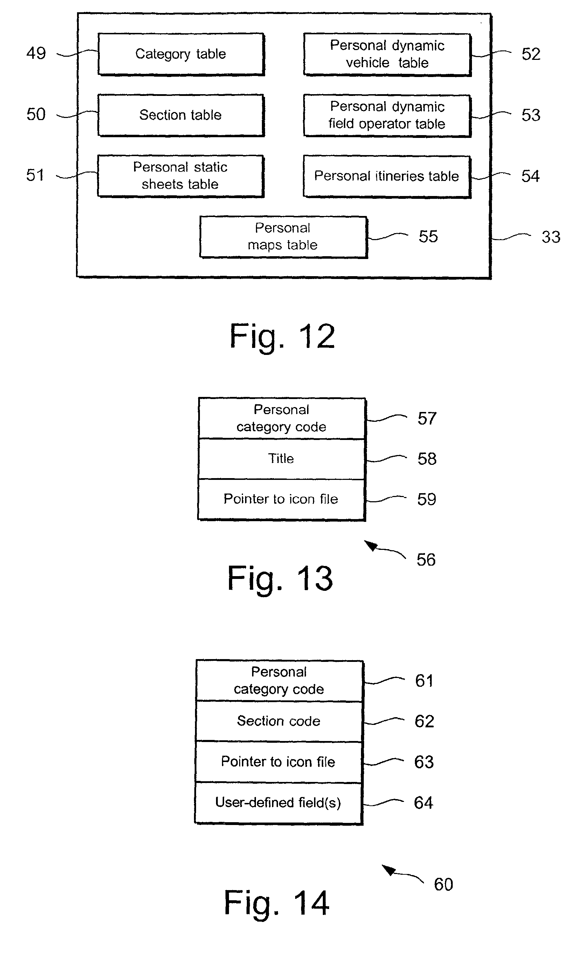

Referring to Figure 12, the geographically referenced information database 33 includes georeferenced data created or provided by the user. In this example, the database 33 is held in storage 10 (Figure 2).

The geographically referenced information database 33 includes a personal category table 49, a personal section table 50, a personal static information sheets table 51, a personal vehicle sheets table 52, a personal field operator sheets table 53, a personal itineraries table 54 and a personal maps table 55.

Referring to Figure 13, the personal category table 49 includes one or more sets of category data 56 each comprising a category code 57, a title 58 and a pointer or link to an icon 59.

Referring to Figure 14, the personal section table 50 includes one or more sets of section data 60 each comprising a category code 61, a section code 62, a pointer or link to an icon 63 and one or more user-defined fields 64. The user-defined fields 64 may be specified by the user when defining a new section. Each user-defined field 64 identify an attribute in which the user can enter data. For example, a user-defined field may be "Price" and data included in the field may be monetary value. Each user-defined field may be used as search term. ".

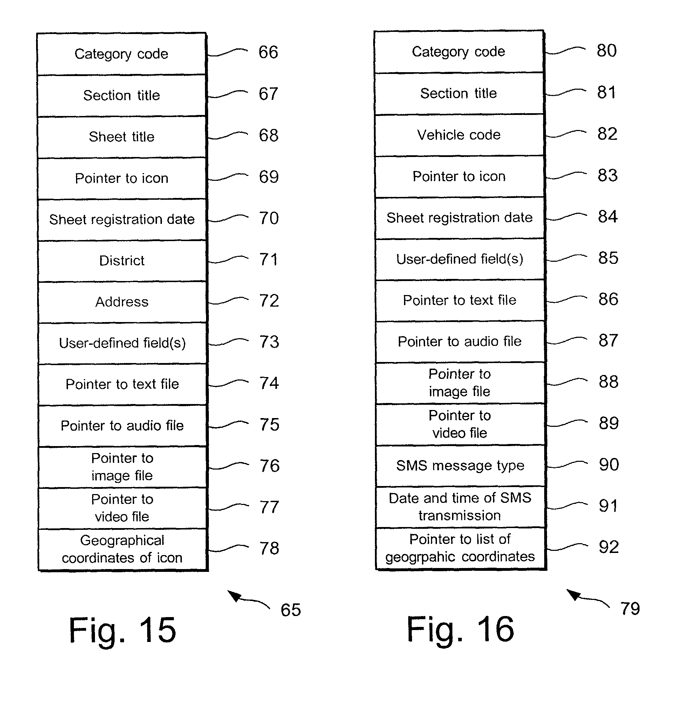

Referring to Figure 15, the personal static information sheets table 51 includes one or more multimedia personal information sheets 65 each comprising a category code 66, a section title 67, a sheet title 68, a pointer or link to an icon 69, a sheet registration date 70, a district 71, a complete address 72, one or more user defined field 73, pointer or link to a text element74, pointer or link to an audio element 75, pointer or link to an image element 76, pointer or link to a video element 77, geographic coordinates 78 for a icon.

If the means for interfacing a mobile telephone 32 (Figure 6) are included, then the geographically referenced information database 28 may include a personal vehicle sheets table 52.

Referring to Figure 16, the personal vehicle sheets table 52 may include one or more multimedia personal information sheets 79, each comprising a category code 80, a section title 81, a vehicle code 82, a pointer or link to an icon 83, a sheet registration date 84, one or more user defined field 85, pointer or link to a text element 86, pointer or link to an audio element 87, pointer or link to an image element 88, pointer or link to a video element 89, an SMS message type 90, date and time of transmission 91 and a pointer to a list of dynamic geographic coordinates 92. The vehicle code may be vehicle number plate. The user-defined field 85 may include vehicle make and model, insurance details, registered owner, driver and other vehicle related information.

As will be explained in more detail later, a vehicle may be fitted with a mobile communications device 226 (Figure 35) and a GPS receiver 227 (Figure 35). The GPS receiver 227 (Figure 35) logs points at predetermined distance or time intervals and can send a message, such as an SMS message, via the means for interfacing a mobile telephone 32 (Figure 6) to the client computer 1. Thus, the list of dynamic geographic coordinates includes geographic coordinates of points logged by the GPS receiver 227 (Figure 35). In this example, when a message is transmitted, the message includes the list of geographic coordinates logged since the last message was transmitted. The message may also include details relating to minimum and maximum speeds, start and stop times, covered distance and other route-related information.

The SMS message type 90 may specify, for example "RET", indicating that the message is being sent following cell handover, specify, for example "KM", indicating that the message is being sent when covered distance threshold has been exceeded, specify, for example "MIN", indicating that the message is being sent when elapsed time threshold has been exceeded, specify, for example "FER", indicating that the message is being sent when a point or area of arrival has been found or specify, for example "CHK", indicating that the message is being sent on the request of the user.

If the means for interfacing a mobile telephone 32 (Figure 6) are included, then the geographically referenced information database 28 may include a personal field operator sheets table 53.

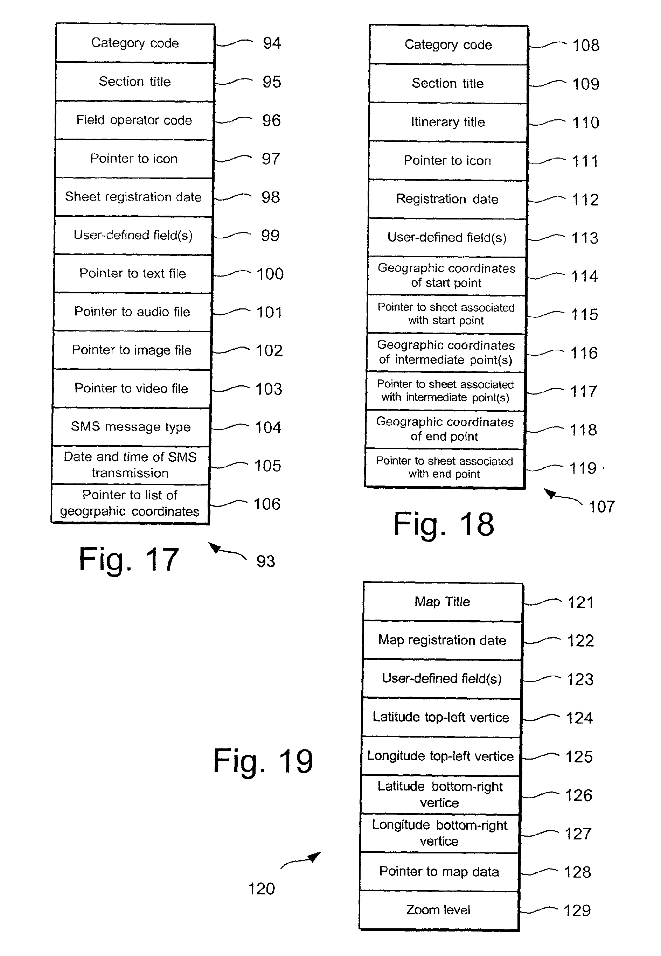

Referring to Figure 17, the personal field operator sheets table 53 may include one or more multimedia personal information sheets 93, each comprising a category code 94, a section title 95, a field operator code 96, a pointer or link to an icon 97, a sheet registration date 98, one or more user defined field 99, pointer or link to a text element 100, pointer or link to an audio element 101, pointer or link to an image element 102, pointer or link to a video element 103, an SMS message type 104, date and time of transmission 105 and a pointer to a list of dynamic geographic coordinates 106. The field operator code 96 may be a register number. User-defined fields 99 may include specialisation, assigned customers, assigned instruments and other field operator information.

As will be explained in more detail later, a GPS receiver 227 (Figure 35) may be fitted to a mobile communications device 226 (Figure 35). The GPS receiver 227 (Figure 35) logs points predetermined distance or time intervals and can send a message, such as an SMS message, via the means for interfacing a mobile telephone 32 (Figure 6) to the client computer 1. Thus, the list of dynamic geographic coordinates includes geographic coordinates of points logged by the GPS receiver 227 (Figure 35). In this example, when a message is transmitted, the message includes the list of geographic coordinates logged since the last message was transmitted.

Referring to Figure 18, the personal itinerary table 54 may include one or more multimedia personal itineraries 107 each including a category code 108, a section title 109, an itinerary title 110, a pointer of link 111 to an icon, a sheet registration number 112, user-defined fields 113, geographic coordinates 114 of a start point, a pointer or link 115 to a multimedia personal information sheet 65 (Figure 15) associated with the start point, one or more sets of geographic coordinates 116 of corresponding intermediate points, one or more pointers or links 117 to corresponding multimedia personal information sheets 65 (Figure 15) associated with the, or each, intermediate point, geographic coordinates 118 of a finish point and a pointer or link 119 to a multimedia personal information sheet 65 (Figure 15) associated with the finish point.

Referring to Figure 19, the personal maps table 55 may include one or more personal map structures 120, each including a map title 121, a map registration date 122, one or more user-defined fields 123, latitude 124 corresponding to a top left-hand corner of the map, longitude 125 corresponding to a top left-hand corner of the map, latitude 126 corresponding to a bottom right-hand corner of the map, longitude 127 corresponding to a bottom right-hand corner of the map, a pointer or link to map data 128 and a zoom level 129 used while georeferencing a personal map.

The data, such as text data, to which a pointer or link refer, such as pointer 74 (Figure 15), may be stored in the geographically referenced database 33 or stored in another database held in storage 10 (Figure 2) or held in other storage (not shown). Instead of storing a pointer or link to data, the data itself may be stored.

### Conventional client computers

If software has not been installed and run, resulting in there being no means for providing the means for managing geographic information 30 the client computer may still access the server computer 2 in a conventional manner using a web browser (not shown) and specifying an universal resource locator (URL).

The means for controlling user access 25 at the server computer 2 (Figure 6) generates a web page via a CGI/ASP interface (not shown). The user is invited to fill out an on-line form for specifying a query. The completed form is submitted to the means for controlling user access 25.

A reply is generated which includes data from the geographic or auxiliary information databases 27, 28.

### Building geographic and auxiliary databases 27, 28

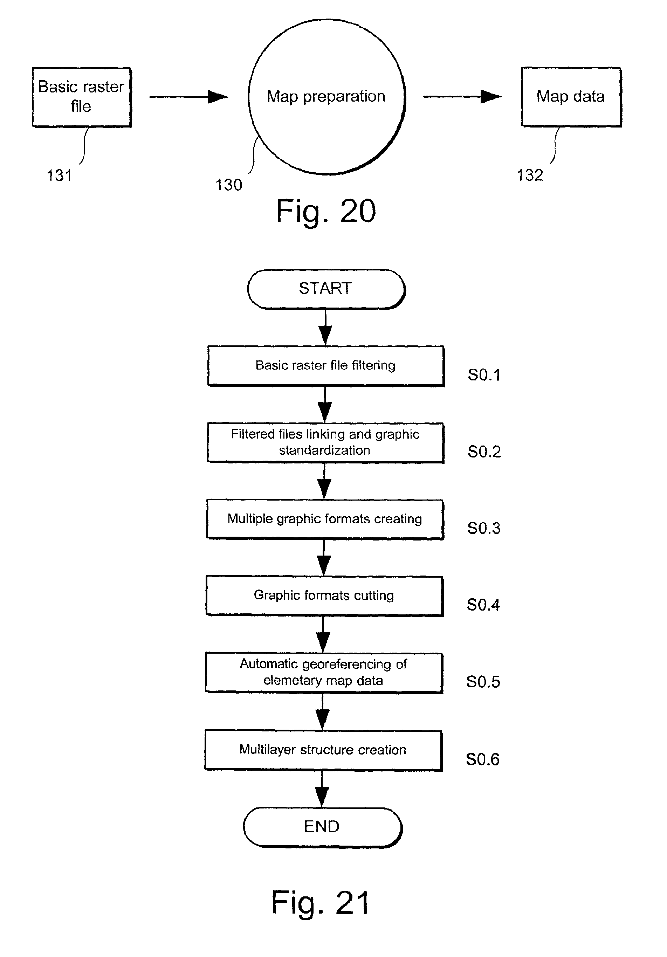

Referring to Figure 20, a process 130 for creating maps and building a geographical information database 27 is shown. The process 130 is performed by the building module 17₃ and converts basic raster files 131 into raster files 132 for storing as map data 34 in the geographical information database 27. The process is usually carried out off-line.

A plurality of graphical representation formats may be used to display a map. These include two dimensional, axonometric and artistic formats.

The axonometric format is obtained by transforming a two dimensional format. Axonometric perspective helps to optimise visualization of maps on the small size screens of cellular phones and Pocket-PC.

Artistic format is an axonometric format where monuments and themes, such as trees, are inserted in artistic representation. This format is directed to tourist and cultural applications.

A server operator (not shown) obtains a source document (not shown) for providing basic graphical information. The source document may be paper-based and may be a cadastral map, road map, aerial photograph, sketch, painting or existing two-dimensional map. The term "paper" is used to refer to any sheet material such as card, canvas and plastic. The paper-based document is digitalized (not shown) using a scanner (not shown) so as to provide a basic raster file 131. The basic raster file 131 may be in a GIF, BMP, JPEG or other graphic file format. Alternatively, the source document may be an existing raster file 131 or vector file, for example in a DGN or DXF file format or other CAD file format. If the source document is an existing vector file it is converted into a raster file.

The source document includes basic geographical information such as size, colours, and information density. However, the basic geographical information it is not georeferenced.

Referring to Figure 21, the basic raster file 131 is subjected to a filtering process to select only geographical information of interest (step S0.1).

The filtered files are also subjected to a graphic standardization process to ensure uniformity of graphic representations, such as outlines of building and roads, colours of streets, buildings, green areas and monuments, and uniformity of descriptions, such use of an appropriate font and use of the same street name along long segments (step S0.2).

The server operator (not shown) imports one or more filtered and standardized basic raster files 131 into a image editing system, such as Photoshop, to manipulate and combine data to form a file for a single large map for a region. For example, the region may be a country, such as Italy.

The file is used to create one or more raster files for the region, each having a different graphic representation format, such as two-dimensional, axonometric and artistic. Preferably, the raster files are in a BMP file format (step S0.3)

Each map in each graphic representation format is divided into sub-regions referred to as elementary maps (step S0.4). Thus, one or more sets of raster file are generated, each set having a different graphic representation format and each raster file within a set comprising map data for an elementary map.

A geographical coordinate system is used to define a position of an origin and a scale. In this example, the coordinate system is the WGS-84 positioning system used in GPS (Global Positioning System). However, another geographic coordinate system may be specified, in which case map data in a GPS coordinate system is converted into map data in another coordinate system.

The size of each elementary map is determined. In this example, all elementary maps have the same size.

Each elementary map is overlaid with a grid and geographical coordinates are calculated for grid crossing using data held in an internal table (step S0.5).

The geographic coordinates are stored for each elementary map (step S0.6).

### Queries and replies

Referring again to Figure 6, the client computer 1 can request information from the server computer 2. This comprises the means for managing information 30 sending a query, via the means for controlling user access 25, to the means for managing databases 26.

Referring to Figure 22a, a first type of query 133 is shown for requesting a map while navigating system maps. The query 133 is in the form of an interrogation string. The first type of query 133 comprises geographic coordinates 134 for specifying the centre of the requested map, an image range 135 for specifying the size of image, a zoom level 136 for specifying a degree of magnification and geographic district 137 for helping to find the map.

Referring to Figure 22b, a first type of response 138 to the first type of query 133 is shown. The first type of response 138 comprises requested map data 139 and georeferencing parameters 140.

Referring to Figure 23a, a second type of query 141 is shown for searching and mapping an address. The query 141 comprises an address 142, an image range 143 for specifying the size of image, a zoom level 144 for specifying a degree of magnification and geographic district 145 for helping to find the map.

Referring to Figure 23b, a second type of response 146 to the second type of query 141 is shown. The response 146 comprises requested map data 147 and georeferencing parameters 148. If the address is not found, then the response 146 may also include a list of possible alternative addresses 149. If the address includes a street name but not a street number, then the response 146 includes geographic coordinates 150 corresponding to a beginning of the street, the map being centred at the beginning of the street.

Referring to Figure 24a, a third type of query 151 is shown for searching and mapping entities within auxiliary database 28. The query 151 includes geographic coordinates or address 152 corresponding to the centre of a map, a category and, optionally, a section 153 corresponding to an entity sought, an image range 154, a zoom level 155 a geographic district 156 and a limit 157 to the number of entities to be reported.

Referring to Figure 24b, a third type of response 158 to the third type of query 151 is shown. The response 158 comprises requested map data 159 and georeferencing parameters 160. The response 158 also includes a list of entities 161 including corresponding description and geographic coordinates. If the address is not found, then the response 158 may also include a list of possible alternative addresses 162.

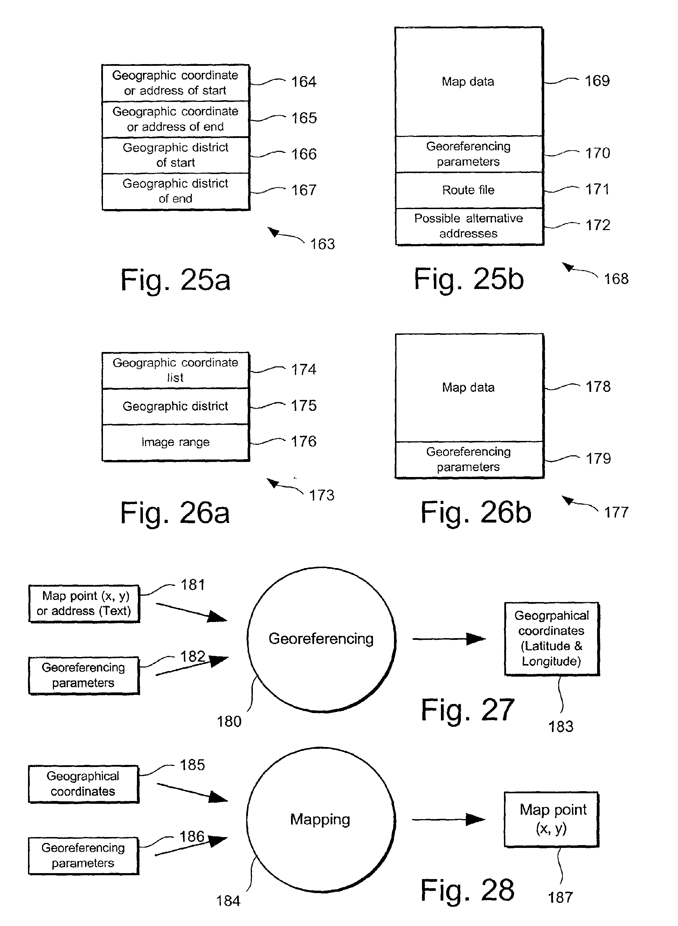

Referring to Figure 25a, a fourth type of query 163 for calculating a route is shown. The query 163 includes geographic coordinates or address 164 corresponding to a beginning of a route, coordinates or address 165 corresponding to an end of a route, a geographic district 166 of the beginning of the route and a geographic district 167 of the end of the route.

Referring to Figure 25b, a fourth type of response 168 to the fourth type of query 163 is shown. The response 168 comprises requested map data 169 and georeferencing parameters 170. The response 168 also comprises a route file 171 including road names, distances, directions for instructing the user, descriptions of where relevant roads start, finish, cross or meet together with corresponding geographic coordinates. If an address is not found, then the response 168 may also include a list of possible alternative addresses 172.

Referring to Figure 26a, a fifth type of query 173 is shown for searching for a map. The query 173 comprises a list of geographic coordinates 174, a geographic district 175 and an image range 176.

Referring to Figure 26b, a fifth type of response 177 to the fifth type of query 173 is shown. The response 177 comprises requested map data 178 for a map which includes some or all of the geographic coordinates specified in the query 173 and georeferencing parameters 179.

In this example, the requested map data 139, 147, 159, 169, 178 are graphics files, such as GIF , JPEG or BMP. However, other formats may be used. The image ranges 135, 143, 154, 176 are given in terms of number of pixels. Preferably, the number of pixels specifies the height and width of the display 9 (Figure 2).

### Georeferencing

Referring to Figure 27, the means for managing geographic information 30 (Figure 6) performs georeferencing of data. A georeferencing process 180 receives data 181 in the form of an address or map coordinates (x, y) and, using georeferencing parameters 182, and converts the data 181 into geographical coordinates 183. Map coordinates of a point or area can be specified by a user clicking on the point on a map.

The means for managing geographic information 30 may be called upon by the means for controlling a user interface 31 to perform the georeferencing process 180.

For example, a user may wish to insert his or her personal multimedia information sheet 65 (Figure 15) into a map obtained from the server computer 2. The user can specify the address, where an icon should be placed and the means for managing geographic information 30 calculates the geographic coordinates 183 of the position using georeferencing parameters 182. The geographic coordinate 183 is stored in the geographically referenced database 33 (Figure 6) and may be used subsequently for searching and mapping. This process will be described in more detail later.

Map coordinates 181 may also be referred to as graphic coordinates or pixel coordinates.

### Mapping

Referring to Figure 28, the means for managing geographic information 30 also performs an inverse of georeferencing, namely mapping. A mapping process 184 receives geographical coordinates 185 and, using georeferencing parameters 186, converts them into map coordinates 187. The geographical coordinates 185 may relate to a point or an area.

The mapping process may also graphically superimpose an icon, area or other graphic on a displayed map at the calculated map coordinates 187.

The means for managing geographic information 30 may be called upon by the means for controlling a user interface 31 to perform the mapping process 184.

For example, a user, having searched the geographically referenced database 33 (Figure 5) for a static entity for example as defined by a multimedia personal information sheets 65 (Figure 15), can indicate the position on a map which has been obtained from server computer 2 (Figure 6). This process will be described in more detail later.

### User interface 188

Referring to Figure 29, the means for controlling user interface 31 (Figure 6) may provide one or more user interfaces including a browser window 188 displayed on display 9 (Figure 2).

The browser window 188 includes a window 189 for displaying a map 190 and a plurality of buttons 191, 192, 193, 194, 195 for selecting different options. A first button 191 is for selecting an option to retrieve basic information from the server computer 2 (Figure 6) and allows a user to browse the geographic and auxiliary databases 27, 28 (Figure 6). A second button 192 is for selecting an option to access multimedia personal information sheets 65, 79, 93 (Figures 15, 16 & 17). This allows a user to create new multimedia personal information sheets 65, 79, 93, modify or destroy existing ones or consult contents stored in them. A third button 193 is for selecting an option to access multimedia personal itineraries 107 (Figure 18). This allows a user to create new multimedia personal itineraries 107, modify or destroy existing multimedia personal itineraries 107 or consult the contents stored in existing multimedia personal itineraries 107. A fourth button 194 is for selecting an option to access personal maps 120 (Figure 19). This allows a user to create new multimedia personal maps 120, modify or destroy existing multimedia personal maps 120 or consult contents stored in multimedia personal maps 120. A fifth button 195 is for selecting an option to access geographical coordinates transmitted by a mobile communications device 226 (Figure 35) fitted with a GPS receiver 227 (Figure 35).

The browser window 188 also includes a control bar 196 including dialog box 197 for searching. The box 197 includes a first field 198 for entering a road type, such as "via", "street" or "square", a second field 199 for entering a road name, such as "Quattro novembre", "Oxford" or "Trafalgar", and a third field 200 for entering a number, i.e. a street number.

The browser window 188 also includes tools 201 for searching territory displayed in the map display window 189. For example, the user can input names such as country, region, municipality etc or may select the desired name within an automatically supplied list.

The browser window 188 also includes tools 202, 203, 204 for manipulating the map 189, such as buttons 202, 203 for zooming in and out, and a directional key 204 for shifting the map left, right, up, down and diagonally.

The browser window 188 also includes buttons 205, 206, 207, for selecting shapes which the user can then draw on the map 190. This permits the user to select areas of the map 190 to be personalised or areas of the map 190 where a search is restricted. The browser window 188 also includes button 208 to measure directly any distance between two or more points within map 190 and button 209 to zoom into the user's drawn area using button 205, 206, 207.

In Figure 29, the map 190 is a two-dimensional map.

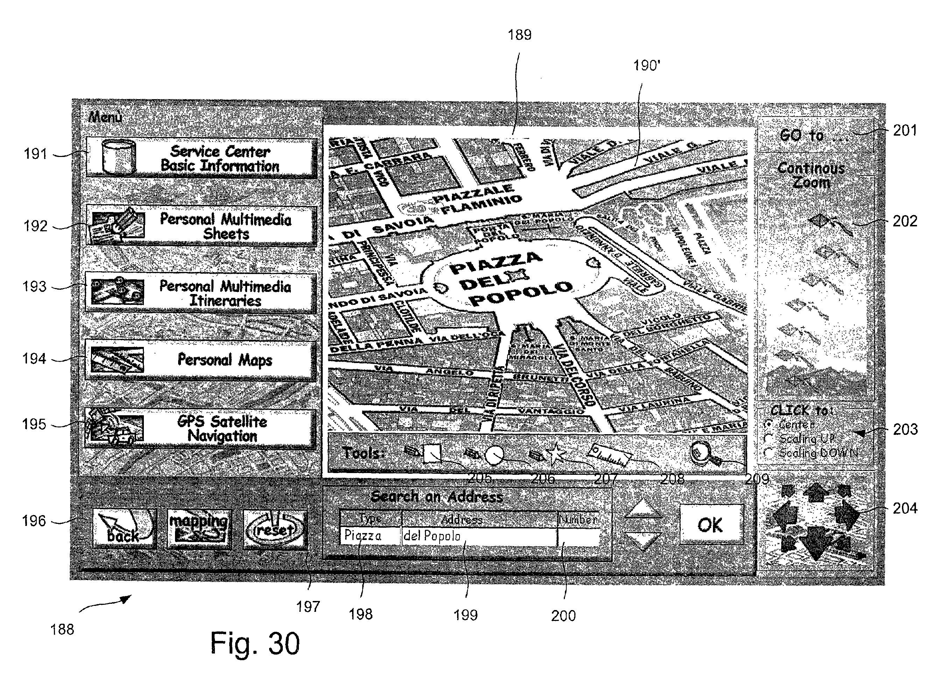

Referring to Figure 30, the browser window 188 is shown in which an axonometric map 190' is displayed.

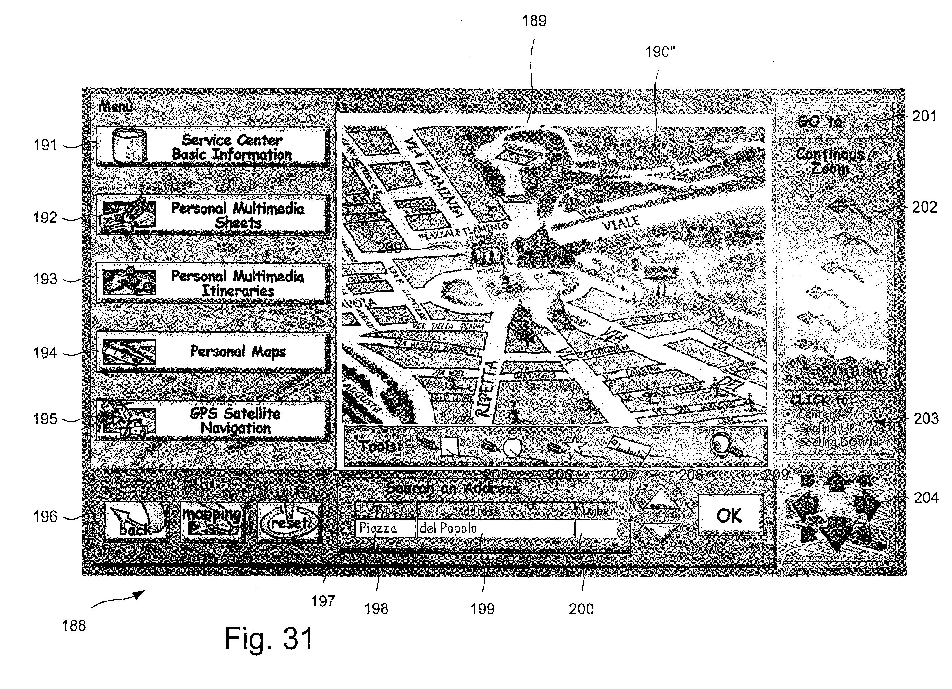

Referring to Figure 31, the browser window 188 is shown in which an artistic map 190" is displayed.

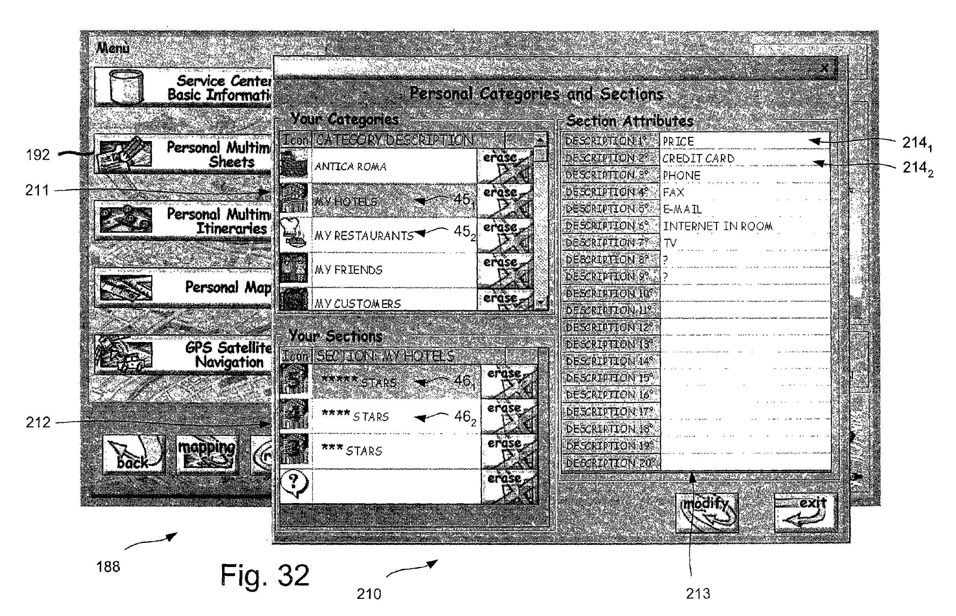

Referring to Figure 32, a user selects the multimedia personal information sheet option 191 and is presented with a window (not shown) for receiving user instructions. The user chooses an option (not shown) for defining personal categories and sections.

The user is presented with a window 210 including a box 211 listing categories 45₁, 45₂, such as "hotels" and "restaurants", and a box 212 listing sections 46₁, 46₂ within a selected category, for example "five star" and "four star". The user may add, modify or delete categories 45₁, 45₂ and sections 46₁, 46₂.

The window 210 also includes a box 213 for defining or labelling fields 214₁, 214₂ in relation to a given category 45₁ and section 46₁, in which a user may subsequently enter data. For example, a first field 214₁ is "Price".

When a user comes to create multimedia personal information sheets 65 (Figure 15), he or she selects a category and section and is presented with user-defined fields 73 (Figure 15) with labels 214₁, 214₂. User-defined fields may be referred to as variable or personal attributes or "Data XX occur 20".

### Creating a multimedia personal information sheet

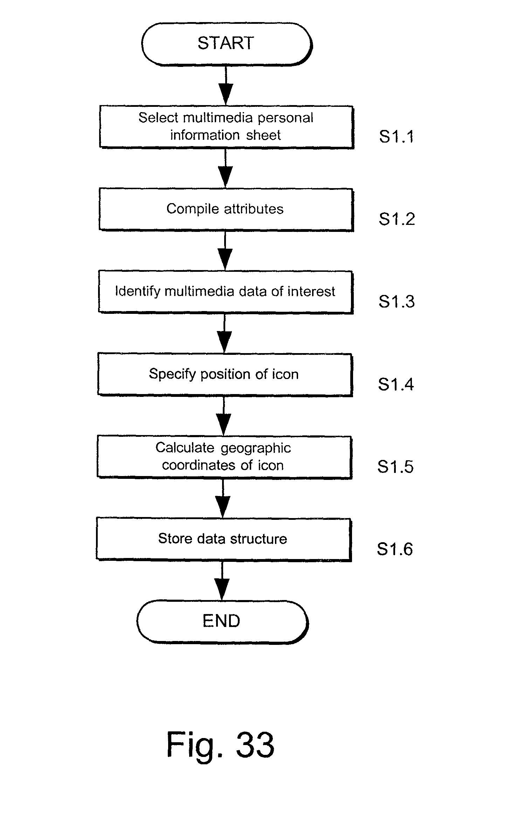

Referring to Figure 33, a process flow diagram of a method of creating a geographically referenced data structure, referred to herein as a "multimedia personal information sheet", is shown.

A user selects the multimedia personal information sheet option 191 (Figure 29) (step S1.1) and is presented with window (not shown) for receiving user instructions. The user chooses an option (not shown) for creating a multimedia personal information sheet (step S1.2).

The user creates a multimedia personal information sheet by compiling a list of relevant attributes (step S1.3)

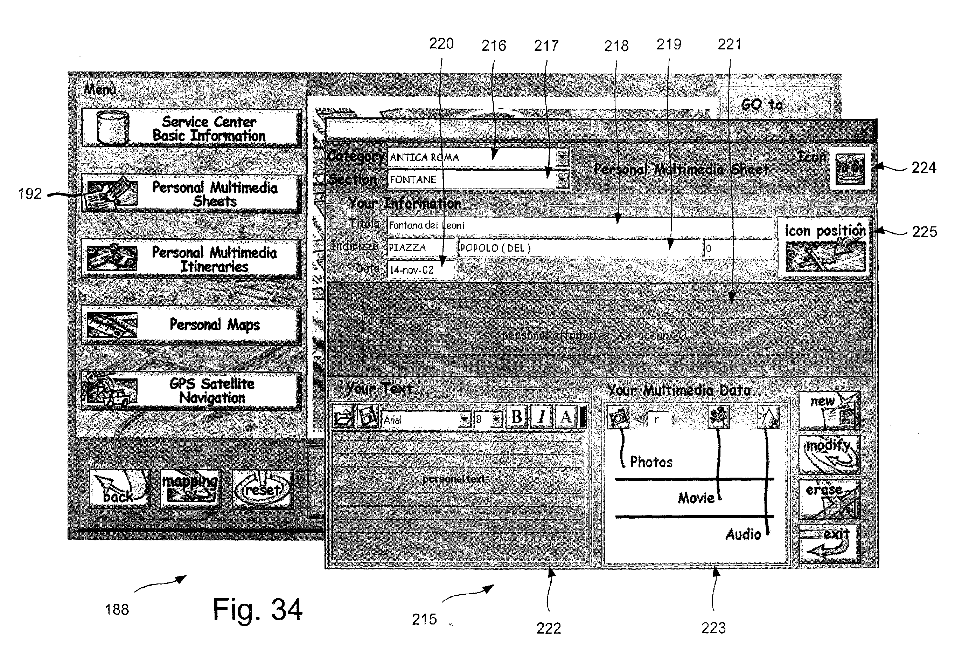

Referring to also Figure 34, the user is presented with a window 215 including boxes, menus and other user interfaces 216, 217, 218, 219, 220, 221, 222, 223, 224 225 into which the user may enter personal data.

The user may select a category 216 and a section 217, such as "Roman Relics" and "Fountains" respectively. The user enters a title 218, such as "Leoni Fountain", an address 219 and a registration date 220. The user enters data into one or more user-defined fields 221, enters a text description 222, selects or provides multimedia files 223 and an icon 224. Each attribute can be used as search key. In this example, up to 20 attributes may be entered in the user-defined fields 221.

The user may browse the geographically referenced database 33 (Figure 6), other databases (not shown) held in storage 10 (Figure 2) or external databases (not shown) to identify and provide his or her own multimedia data, such as text, image, sounds and movie.

The user chooses a position with which to associate the multimedia personal information sheet he or she has so far created and an icon with which to represent it, such as an icon of a fountain or a thumbnail picture of the Leoni Fountain (step S1.4).The user indicates that they are ready to choose a position for the icon by pressing a button 225 and specifying the position in one of a number of ways:

### Specifying position of an icon using an address

The user may specify an address including a street name and street number.

Referring to Figure 6, the means for controlling user interface 31 receives the address and forwards it to the means for managing geographic information 30.

The means for managing geographic information 30 opens a connection to the means for controlling user access 25 and sends a query of the second type 141 (Figure 23a). The query 141 (Figure 23a) is passed on to the means formanaging databases 26, which searches the geographical and auxiliary databases 27, 28, retrieves the relevant information and returns it to the means for controlling user access 25. The means for controlling user access 25 prepares and sends a reply of the second type 146 (Figure 23b) to the means for managing geographic information 30 after which the connection is closed. As described earlier, the reply 146 includes map data 147 (Figure 23b) and georeferencing parameters 148 (Figure 23b).

The means for managing geographic information 30 calculates geographic coordinates corresponding to the address (step S1.5).

The geographic coordinates of the address, indicating the position of the icon, are forwarded to the means for controlling user interface 31.

### Specifying position of an icon using an address without a street number

The user may specify an address using a street name but not a street number.

Referring to Figure 6, the means for controlling user interface 31 receives the address and forwards it to the means for managing geographic information 30.

The means for managing geographic information 30 opens a connection to the means for controlling user access 25 and sends a query of the second type 141 (Figure 23a). The query 141 (Figure 23a) is passed on top the means formanaging databases 26, which searches the databases 27, 28, retrieves the relevant data and returns it to the means for controlling user access 25. The means for controlling user access 25 prepares and sends a reply of the second type 146 (Figure 23b) to the means for managing geographic information 30 after which the connection is closed. As described earlier, the reply 146 includes map data 147 (Figure 23b) and georeferencing parameters 148 (Figure 23b).

The means for managing geographic information 30 calculates geographic coordinates corresponding to the address while outputting the relationship between the geographic coordinates and the graphical coordinates.

Because no street address is specified, the icon is placed at a predefined position on the street. Conveniently, this may be the beginning, middle or end of the street. In this example, the map is centred where the street begins. The user, however, can reposition the icon from the predefined position to a desired location. This may be achieved for example by selecting and "dragging" the icon until the desired position is reached and "dropping" the icon by deselecting it. Preferably, the user input means 8 (Figure 2) includes a mouse which can be used to "drag-and-drop" icons displayed on a screen.

If the icon is repositioned, the means for controlling user interface 31 sends graphical coordinates corresponding to the position of the icon to the means for managing geographic information 30 which converts them into corresponding geographical coordinates using georeferencing parameters 178 (Figure 23b). The corresponding geographical coordinates are returned to the means for controlling user interface 31.

### Specifying position of an icon by clicking on a map

If the user has already provided a map, then he or she may specify a position for the icon by positioning a pointer or cursor at a desired position and selecting it. Preferably, the user input means 8 (Figure 2) includes a mouse which can be used to select a point by "clicking" on a screen.

The means for controlling user interface 31 determines the position of the pointer on the display selected by the user and sends map coordinates corresponding to the selected position to the means for managing geographic information 30 which converts them into corresponding geographical coordinates. No new connection to the server computer 1 (Figure 6) is opened. The corresponding geographical coordinates are returned to the means for controlling user interface 31.

### Saving multimedia personal information sheets

Having defined the position of the icon on a map using any of the method described earlier, the user selects an option (not shown) to save the multimedia personal information sheet 65 (Figure 15) (step S1.6).

The means for controlling user interface 31 stores the geographic coordinates and the attributes entered through user interfaces 216, 217, 218, 219, 220, 221, 222, 223, 224 225 in fields 66, 67, 68, 69, 70, 71, 72, 73, 74, 75, 76, 77, 78 (Figure 15) of a multimedia personal information sheet 65 (Figure 15) in the personal static sheets table 51 (Figure 12) in the geographically referenced database 33 (Figure 33).

### Associating a multimedia personal information sheet with an area

The multimedia personal information sheet can be associated with an area instead of a point location.

Referring in particular to Figure 29, the user selects a shape tool 204, 205, 206 and draws a shape on the map 190.

The means for controlling user interface 31 (Figure 6) sends graphical coordinates corresponding to points on the outline of the area to the means for managing geographic information 30 (Figure 6) which converts them into corresponding geographical coordinates. The corresponding geographical coordinates are returned to the means for controlling user interface 31 (Figure 6).

The user can select an option to save a multimedia personal information sheet 65 (Figure 15) in the personal static sheets table 51 (Figure 12) in the geographically referenced database 33 (Figure 33).

### Importing information from local or remote external archives

The multimedia personal information sheet 65 (Figure 15) can be created using data imported from a local or remote external archive. The data may be text data and/or multimedia data. The data includes geographical coordinates or an address for an imported entity.

The user identifies an external archive file using a browser, analyses its file structure and content and defines a relationship between fields within it and fields within a multimedia personal information sheet 65 (Figure 15). Data is then copied from the external archive file into the multimedia personal information sheet 65 (Figure 15).

If the imported data includes geographic coordinates, then the multimedia personal information sheet can be stored in the geographically referenced database 33 (Figure 6) without further processing.

If the imported data includes an address, the means for managing geographic information 30 (Figure 6) converts the address into geographic coordinates using one of the methods described earlier.

The user can proceed by saving the multimedia personal information sheet 65 (Figure 15) as described earlier.

### Associating a multimedia personal information sheet with a mobile entity

Referring to Figure 35, a mobile communications device 226 is connected to, or fitted with, a Global Positioning System (GPS) receiver 227. The mobile communications device 226 may be a mobile telephone handset. The mobile communications device 226 may be a notebook computer or a handheld computer fitted with a wireless modem or connected to a mobile telephone handset. The mobile communications device 226 and GPS receiver 227 may be fitted in a vehicle and may be incorporated into an on-board computer.

The mobile communications device 226 can transmit GPS position data to the client computer 1 via a wireless communications network 228. The wireless network 228 may be public communications network, such as 2G or 3G communications network, or a private communications network, such as a private local loop.

Geographical coordinates can be entered manually into the client computer 1 by the user through the user input 8 (Figure 2), through a connection via the network interface 12 (Figure 2), the wireless network interface 13 (Figure 2), through the I/O interface 6 (Figure 2) or via removable storage 10 (Figure 2). The geographical coordinates may be stored as a file.

The geographic coordinates need not correspond to a current location, but may correspond to a previous location.

### Searching multimedia personal information sheets

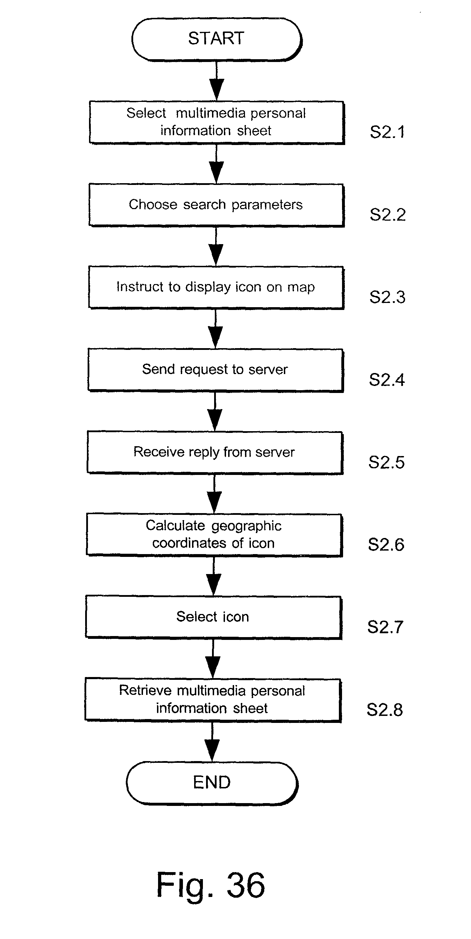

Referring to Figure 36, a process flow diagram of a method of searching multimedia personal information sheets, displaying their position on a map and viewing their contents is shown.

A user selects multimedia personal information sheet option 192 (Figure 29) (step S2.1) and is presented with window (not shown) for receiving user instructions.
The user chooses an option (not shown) for searching multimedia personal information sheets 65 (Figure 15). The user is presented with a window (not shown) for entering search terms. The user specifies one or more search terms so as to locate a single multimedia personal information sheet 65 (Figure 15) or a group of multimedia personal information sheets stored in the geographically referenced database 33 (steps S2.2).

The means for controlling user interface 31 retrieves the multimedia personal information sheets from the geographically referenced database 33 which fall within the scope of the search and displays them.

The user selects an option (not shown) to display the icon or area associated with selected one or more of the multimedia personal information sheets 65 (Figure 15) on a map (step S2.3).

The means for controlling user interface 31 copies geographic coordinates for each of the multimedia personal information sheets 65 (Figure 15) selected and passes them to the means for managing geographic information 30.

The means for managing geographic information 30 opens a connection to the means for controlling user access 25 and sends a query of the fifth type 173 (Figure 26a) (step S2.4). The query 173 (Figure 26a) is passed on to the means formanaging databases 26, which searches the databases 27, 28, retrieves any relevant data and returns it to the means for controlling user access 25. The means for controlling user access 25 prepares and sends a reply of the fifth type 177 (Figure 26b) to the means for managing geographic information 30 after which the connection is closed (step S2.5). As described earlier, the reply 177 includes map data 160 (Figure 20b) and georeferencing parameters 161 (Figure 26b).

The means for managing geographic information 30 forwards the map data 160 (Figure 26b) to the means for controlling user interface 31 for displaying a map. The means for managing geographic information 30 also converts the geographical coordinates of icon positions into graphical coordinates and forwards these to the means for controlling user interface 31 for displaying icons on the map (step S2.6).

At this point, the user is presented with a map on which icons are superimposed, each icon associated with a multimedia personal information sheet 65 (Figure 15). The user, having consulted the map, may now select an icon and view the contents of the corresponding multimedia personal information sheet (step S 2.7). Preferably, the user input means 8 (Figure 2) includes a mouse which can be used to select an icon by "clicking" on a screen.

The means for controlling user interface 31 retrieves the selected multimedia personal information sheet 65 (Figure 15) from the geographically referenced database 33 and displays the contents(step S2.8). The user may, if they wish to do so, select other icons and view contents of other multimedia personal information sheets.

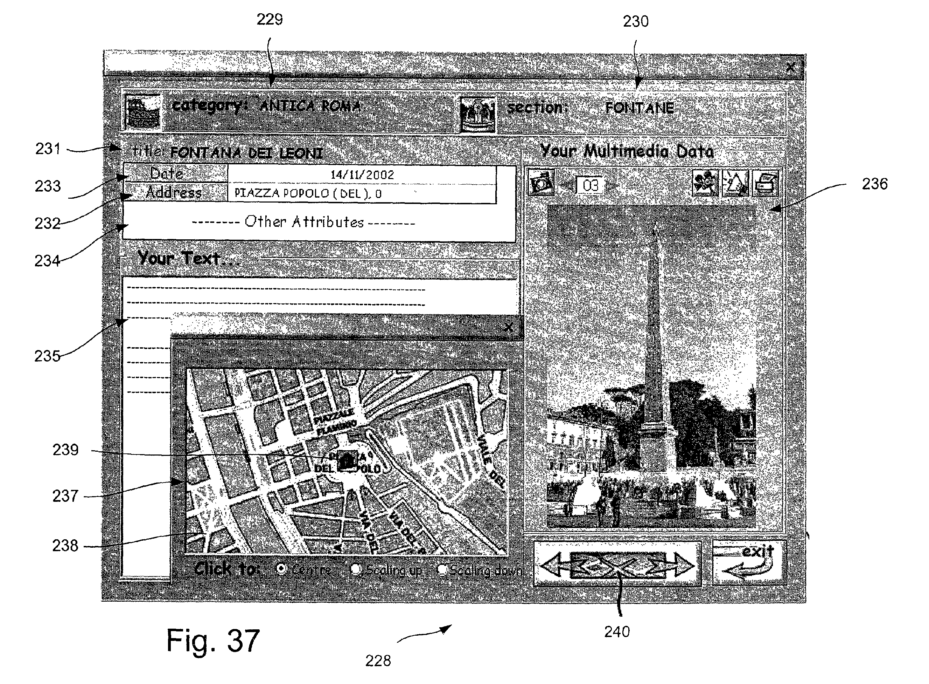

Referring to Figure 37, an example of a window 228 displaying a multimedia personal information sheet 65 (Figure 15) is shown.

The window 228 includes regions 229, 230, 231, 232, 233, 234, 235, 236 for displaying or presenting data stored in the multimedia personal information sheet 65 (Figure 15). A further window 237 displays a map 238 in which is displayed an icon 239 of geographical coordinates 78 (Figure 15). Control buttons 240 are provided for viewing other multimedia personal information sheets 65 (Figure 15).

### Displaying icons while navigating system maps

Icons can be displayed while the user navigates maps, as will now be explained.

Referring to Figure 29, the user retrieves map data for the map 190 (Figure 29) from the geographical information database 27 (Figure 6) in a manner described earlier and displays the map 190 in the browser window 188.

The user then selects personal multimedia information sheet option 192 and is presented with a window (not shown) for receiving user instructions. The user chooses an option (not shown) for searching multimedia personal information sheets 65 (Figure 15). The user enters a search term. The means for controlling user interface 31 (Figure 6) retrieves multimedia personal information sheets 65 (Figure 15) from the geographically referenced database 33 (Figure 6) which include a match to the search term and which have geographic coordinates that fall within the range of displayed map or an area of the map defined by the user.

The means for controlling user interface 31 (Figure 6) forwards the geographic coordinates of a selected sheet to the means for managing geographic information 30(Figure 6) so as to convert them into graphical coordinates. The graphical coordinates are returned to the means for controlling user interface 31 (Figure 6) for displaying icons on the map 190 (Figure 29).

### Creating a personal itinerary

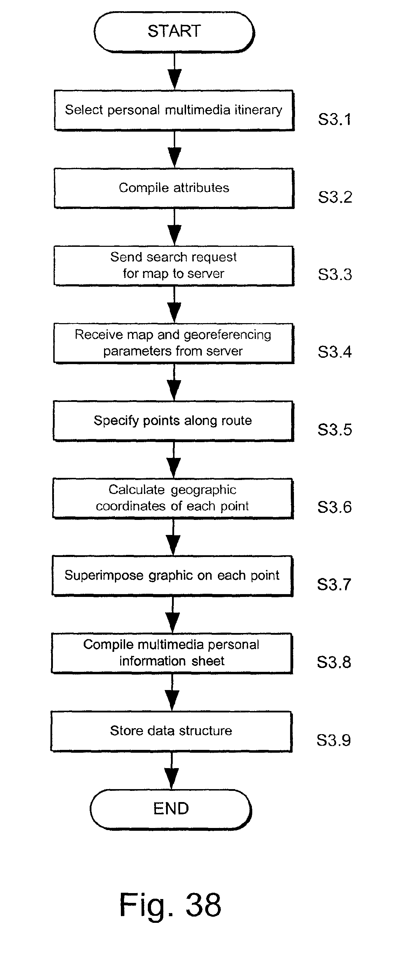

Referring to Figure 38, a process flow diagram of a method of creating geographically referenced data structure referred to as a multimedia personal itinerary 107 (Figure 18) is shown.

A user selects multimedia personal itinerary option 193 (Figure 29) (step S3.1) and is presented with a window (not shown) for receiving further instructions. The user chooses an option (not shown) for creating a personal itinerary.

The user compiles a list of attributes for an itinerary which can be used later for searching (step S3.2).

### Specifying position of a point on an itinerary

The user specifies a point on the itinerary. This may be the start or end point or any intermediate point. In this example, the point is the start of the itinerary. The point is specified using an address with or without a street number. Alternatively, the user can browse the geographic information database 27, navigate maps and specify a point by clicking a map.

Referring to Figure 6, the means for controlling user interface 31 receives the address and forwards it to the means for managing geographic information 30.

The means for managing geographic information 30 opens a connection to the means for controlling user access 25 and sends a query of the second type 141 (Figure 23a) (step S3.3). The query 141 (Figure 23a) is passed on to the means formanaging databases 26, which searches the databases 27, 28, retrieves the relevant information and returns it to the means for controlling user access 25. The means for controlling user access 25 prepares and sends a reply of the second type 146 (Figure 23b) to the means for managing geographic information 30 after which the connection is closed (step S3.4). As described earlier, the reply 146 includes map data 147 (Figure 23b) and georeferencing parameters 148 (Figure 23b).

The means for managing geographic information 30 calculates geographical coordinates corresponding to the address and forwards them to the means for controlling user interface 31.

A map is displayed in the browser window 188 (Figure 29).

The user then specifies one or more intermediate points along a route and a finish point (step S3.5). Each point may be associated with a corresponding multimedia personal information sheet. Consecutive points along the route are joined with a line. Preferably, the user input means 8 (Figure 2) includes a mouse which can be used to specify points on the map by "clicking" on a screen.

The means for controlling user interface 31 forwards graphical coordinates corresponding to the points along the route to the means for managing geographic information 30 where they are converted into corresponding geographic coordinates. The means for managing geographic information 30 returns the corresponding geographic coordinates to the means for controlling user interface 31 (step S3.6).

The means for managing geographic information 30 superimposes an icon on each point (step S3.7). By selecting the icon, a window (not shown) is presented to the user for inserting, viewing or editing a corresponding multimedia personal information sheet 65 (Figure 15). The user selects one or more points so as to create one or more corresponding a multimedia personal information sheets (step S3.8). A method of creating a multimedia personal information sheet is described earlier. The user may associate an icon with an existing multimedia personal information sheet stored in the geographically referenced database 33.

The user then selects an option (not shown) to store the personal itinerary in database 33 and the personal itinerary is stored in the itinerary table 54 (Figure 12) (step S3.9)

### Providing points along a route using GPS

The user may specify the two or more points along a route by providing geographic coordinates obtained using a GPS device.

A user provided with a GPS device travels along the route capturing geographic coordinates.

Once all the geographic coordinates have been collected, the user selects some or all of the captured geographic coordinates and creates a personal multimedia itinerary 107 (Figure 18).

The process of creating the personal itinerary begins in the same as that described earlier. However, in this case, the user specifies points along the route using some or all of the captured geographic coordinates. The user enters the geographic coordinates manually via user input 8 (Figure 2).

The means for controlling user interface 31 passes the geographic coordinates to the means for managing geographic information 30.

The means for managing geographic information 30 opens a connection to the means for controlling user access 25 and sends a query of the fifth type 173 (Figure 26a). The query 173 (Figure 26a) is passed on to the means formanaging databases 26, which searches the databases 27, 28, retrieves the relevant data and returns them to the means for controlling user access 25. The means for controlling user access 25 prepares and sends a reply of the fifth type 177 (Figure 26b) to the means for managing geographic information 30 after which the connection is closed. As described earlier, the reply 177 includes map data 178 (Figure 26b) and georeferencing parameters 179 (Figure 26b).

The means for managing geographic information 30 calculates graphical coordinates for each point and forwards the map data 178 (Figure 26b) and the graphical coordinates to the means for controlling user interface 26 for displaying in the map as a line representing the itinerary together with icons placed at the start point, one or more intermediate points and the end point.

The user continues to create the personal itinerary in a similar way to that described earlier.

### Searching a personal itinerary

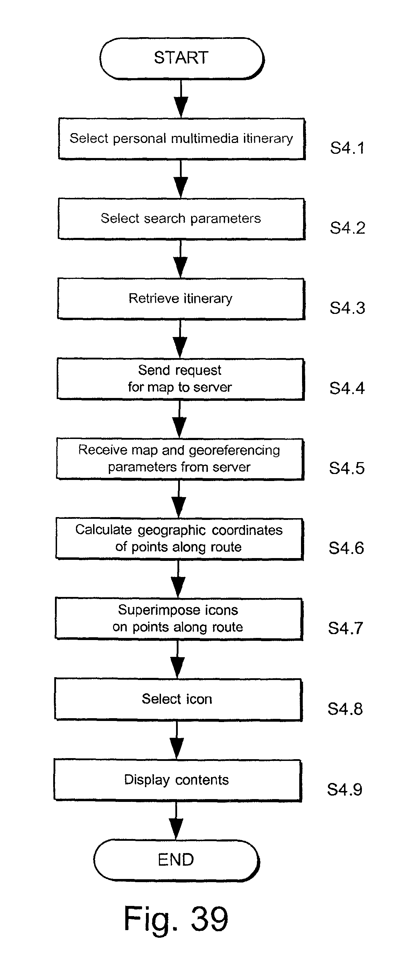

Referring to Figure 39, a process flow diagram of a method of searching multimedia personal itinerary, displaying its position on a map and consulting their contents is shown.

A user selects multimedia personal itinerary option 193 (Figure 29) (step S4.1) and is presented with window (not shown) for receiving user instructions. The user chooses an option (not shown) for searching multimedia personal itinerary. The user is presented with a window (not shown) for entering search terms. The user specifies one or more search terms so as to locate a single multimedia personal itinerary stored in the geographically referenced database 33 (steps S4.2).

The means for controlling user interface 31 retrieves the multimedia personal itinerary 107 (Figure 18) which fall within the scope of the search and displays them.
The user selects an option (not shown) to display the routes associated with one or more selected multimedia personal itineraries on a map (step S4.3).

The means for controlling user interface 31 copies geographic coordinates 114, 116, 118 (Figure 18) for each point of each multimedia personal itinerary 107 (Figure 18) selected from the geographically referenced database 33 and passes them to the means for managing geographic information 30.

The means for managing geographic information 30 opens a connection to the means for controlling user access 25 and sends a query of the fifth type 173 (Figure 26a) (step S4.4). The query 173 (Figure 26a) is passed on to the means for managing databases 26, which searches the geographical and auxiliary databases 27, 28, retrieves any relevant data and returns them to the means for controlling user access 25. The means for controlling user access 25 prepares and sends a reply of the fifth type 177 (Figure 26b) to the means for managing geographic information 30 after which the connection is closed (step S4.5). As described earlier, the reply 177 includes map data 178 (Figure 26b) and georeferencing parameters 178 (Figure 26b).

The means for managing geographic information 30 forwards the map data 178 (Figure 26b) to the means for controlling user interface 31 for displaying a map. The means for managing geographic information 30 also converts the geographical coordinates into graphical coordinates and forwards these to the means for controlling user interface 31 for displaying icons on the map (step S4.6).

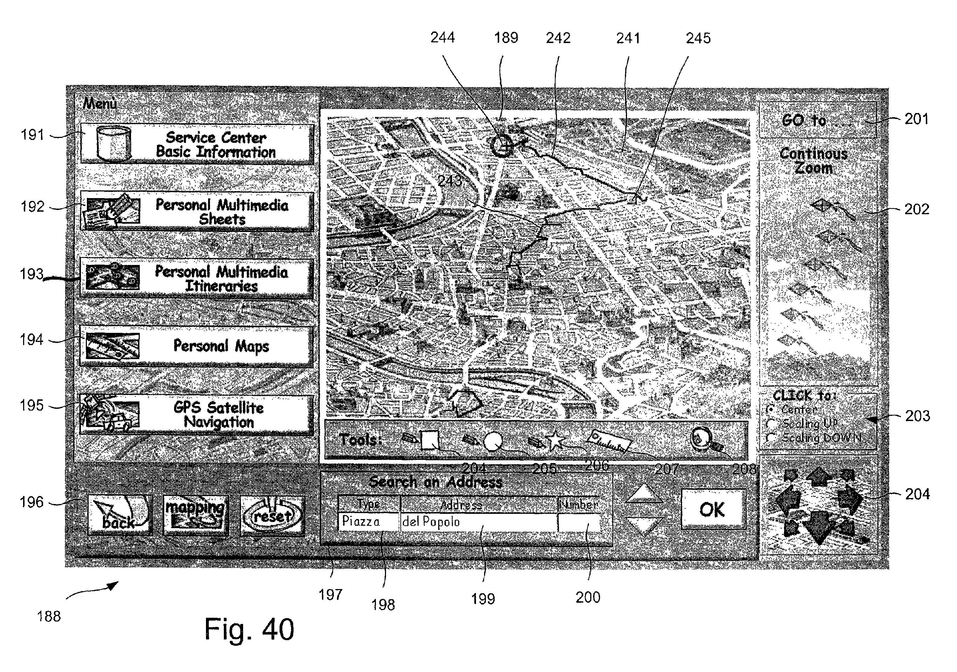

Referring to Figure 40, the browser window 188 shows a map 241 on which one or more routes 242, 243 are displayed. Each route 242, 243 has an icon 244, 245 which may be used to select a route 242, 243.

In this example, the user selects a first route 242 by clicking on the icon 244.

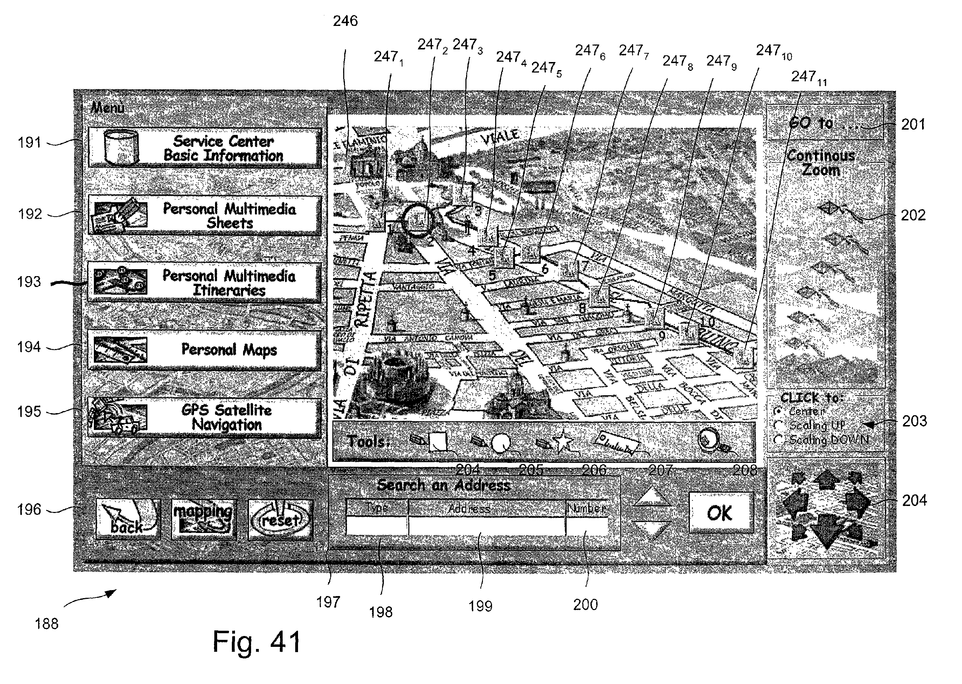

Referring to Figure 41, the browser window 188 shows a map 246, in this case more detailed than the map 241, on which the route 242 is displayed including a plurality of points at each of which is superimposed upon it a respective icon 247₁, 247₂, 247₃, 247₄, 247₅, 247₆, 247₇, 247₈, 247₉, 247₁₀, 247₁₁. Each icon 247₁, 247₂, 247₃, 247₄, 247₅, 247₆, 247₇, 247₈, 247₉, 247₁₀, 247₁₁ may have associated with it a multimedia personal information sheet 65 (Figure 15).

The user, having consulted the map 246, may now select an icon 247₁, 247₂, 247₃, 247₄, 247₅, 247₆, 247₇, 247₈, 247₉, 247₁₀, 247₁₁ and consult the contents of the corresponding multimedia personal information sheet 65 (Figure 15) (step S4.8). Preferably, the user input means 8 (Figure 2) includes a mouse which can be used to select an icon 247₁, 247₂, 247₃, 247₄, 247₅, 247₆, 247₇, 247₈, 247₉, 247₁₀, 247₁₁ by "clicking" on a screen.

The means for controlling user interface 31 retrieves the selected multimedia personal information sheet 65 (Figure 15) from the geographically referenced database 33 and displays the of the corresponding multimedia personal information sheet 65 (Figure 15) (step S4.9).

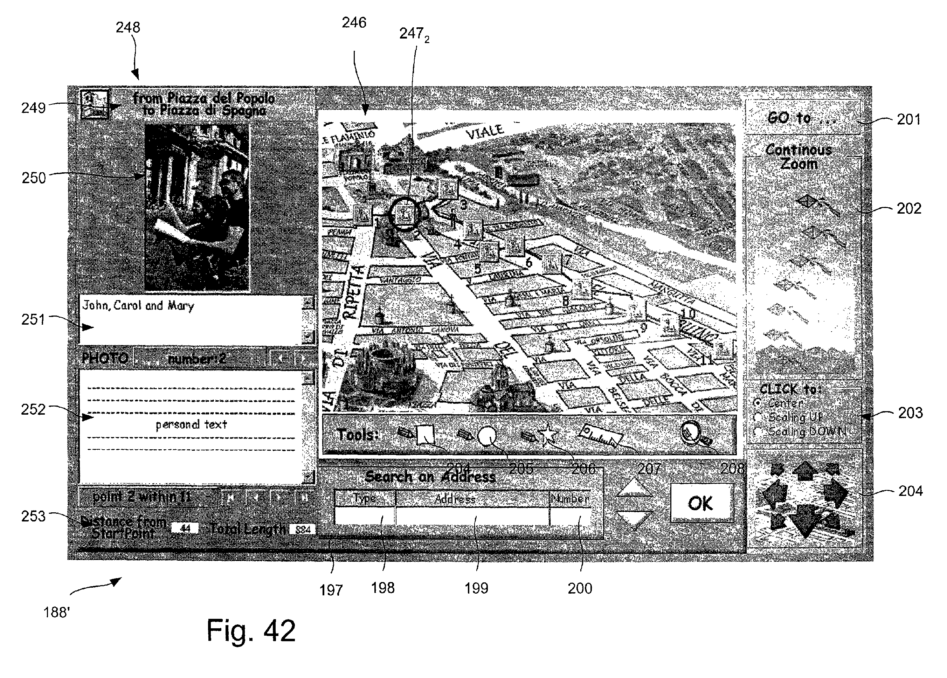

Referring to Figure 42, a modified browser 188' includes a window portion 248. The window portion 248 displays contents including a titile 249, photograph 250, description 251, text 252 and other data such as distance 253.

The user may, if they wish to do so, select other icons and view contents of other multimedia personal information sheets.

### Displaying icons while navigating system maps

Routes and icons can be displayed while the user navigates maps, as will now be explained.

The user retrieves a map from the geographic database 27 in a manner described earlier and displays the map in the browser window 188 (Figure 29).

The user then selects personal multimedia itinerary option 193 and enters a search term. The means for controlling user interface 31 retrieves from the database 33 multimedia personal itineraries 107 (Figure 18) which includes a match to the search term and which have geographic coordinates that fall within the range of displayed map or an area of the map defined by the user.

The means for controlling user interface 31 forwards the geographic coordinates to the means for managing geographic information 30 so as to convert them into graphic coordinates. The graphic coordinates are returned to the means for controlling user interface 31 for displaying icons on the map.

### Creating a personal map

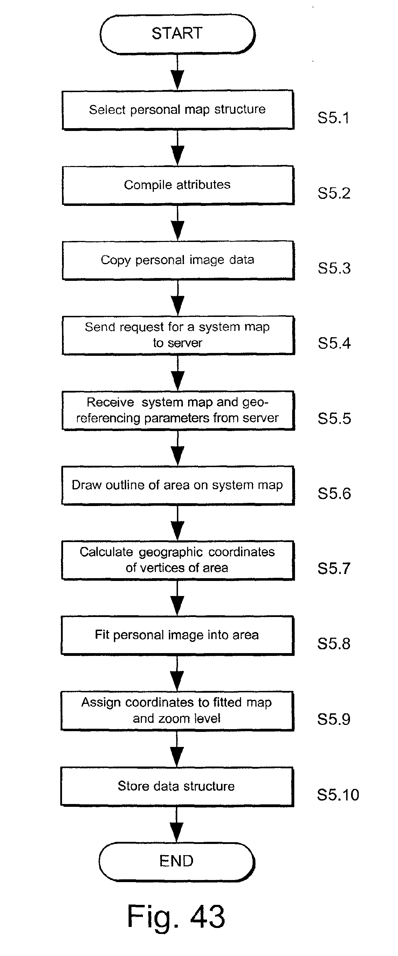

Referring to Figure 43, a process flow diagram of a method of creating a geographically referenced data structure referred to as a personal map is shown.

A user selects personal map option 194 (Figure 29) (step S5.1) and is presented with a window (not shown) for receiving further instructions. The user chooses an option (not shown) for creating a personal map.

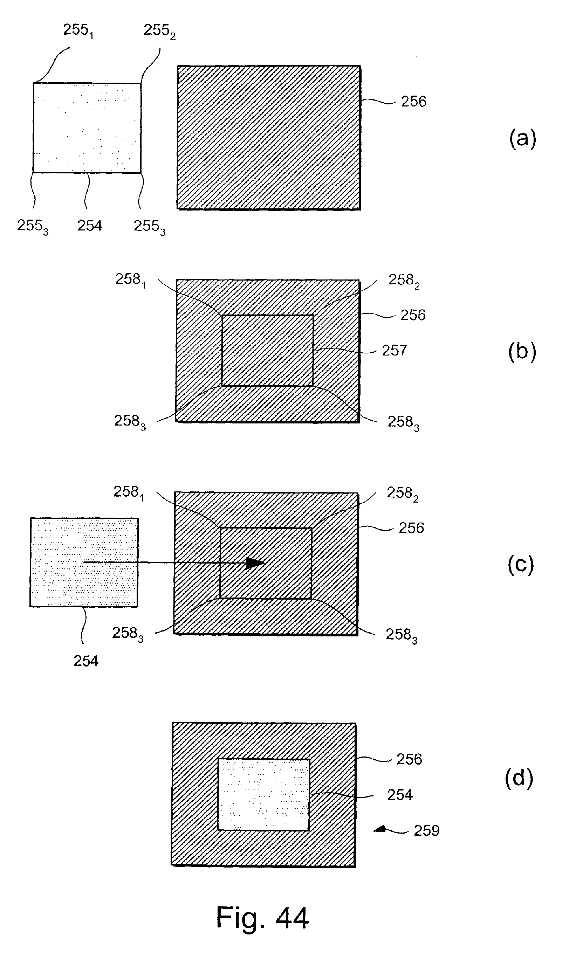

The user compiles a list of attributes for the personal map which can be used later for searching (step S5.2).Referring also to Figure 44a, the user selects and copies image data of a map 254 (step S5.3). The map 254 provided by the user and has four vertices 255₁, 255₂, 255₃, 255₄. The map 254 is referred to as a "personal" map.

The user then obtains a system map 256 from the geographic information server 27 (Figure 5) for example by specifying an address or browsing the geographic information database 27 as described earlier. The map 256 obtained from the server computer 2 is herein referred to as a "system map".

Referring to Figure 6, the means for controlling user interface 31 receives the address and forwards it to the means for managing geographic information 30.

The means for managing geographic information 30 opens a connection to the means for controlling user access 25 and sends a query of the second type 141 (Figure 23a) (step S5.4). The query 141 (Figure 17a) is passed on to themeans for managing databases 26, which searches the geographical database 27, retrieves any relevant information and returns it to the means for controlling user access 25. The means for controlling user access 25 prepares and sends a reply of the second type 146 (Figure 23b) to the means for managing geographic information 30 after which the connection is closed (step S5.5). As described earlier, the reply 146 includes map data 147 (Figure 23b) and georeferencing parameters 148 (Figure 23b).

The map data 147 (Figure 23b) are forwarded to the means for controlling user interface 31 for displaying the system map 256.

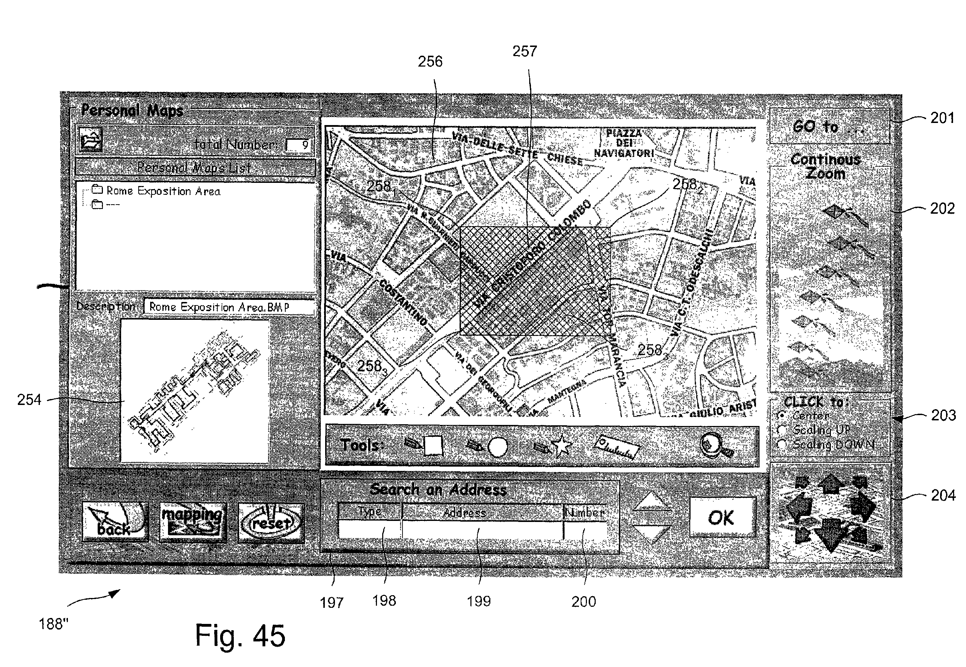

Referring to Figures 44b and 45, the user the user draws an outline 257 of a shape, such as rectangle or square, on the system map 256.

The means for managing geographic information 30 determines graphical coordinates of vertices 258₁, 258₂, 258₃, 258₄ of the outline 257 and converts them into geographic coordinates (step S5.7).

Referring to Figures 44c and 44d, the means for managing geographic information 30 adjusts the size of the map 254 and superimposes the resulting map 254 onto the area bounded by outline 257 so as to produce a map 259 in which the personal map 254 is integrated into the system map 256 (step S5.8).

The means for managing geographic information 30 assigns the geographical coordinates corresponding to the vertices 258₁, 258₂, 258₃, 258₄ of the outline 257 to the vertices 255₁, 255₂, 255₃, 255₄ of the map 254, assigns a zoom level of the system map 256 as a zoom level of the map 254 and passes the geographical coordinates and the zoom level to the means for controlling user interface 31.

The user selects an option (not shown) for saving the personal map 254, 120 (figure 19) which is stored in the geographically referenced database 33.

The personal map 254, 120 (figure 19) need not be a planimetric map. Other types of maps may be used such as graphic images representing territory, aerial photographs, satellite photographs, graphical images representing a historical reconstruction, freehand paintings or drawing and/or artistic representation.

### Searching a personal map

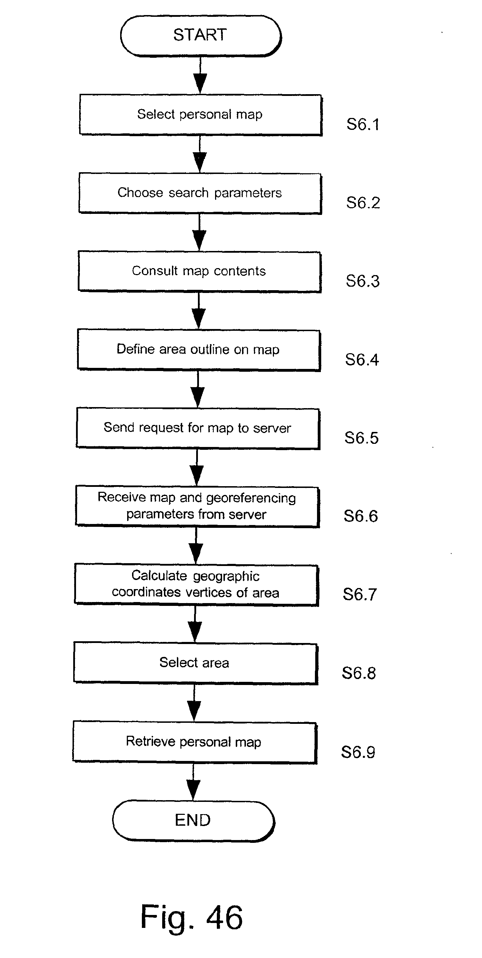

Referring to Figure 46, a process flow diagram of a method searching for personal maps and displaying them on a system map is shown.

A user selects personal map 194 (Figure 29) (step S6.1) and is presented with a window (not shown) for receiving further instructions. The user chooses an option (not shown) for searching for a personal map. The user specifies one or more search terms for locating a personal map (steps S6.2).

The means for controlling user interface 31 retrieves personal maps which fall within the scope of the search. The user may select one or more of the personal maps found in the search.

The user selects an option (not shown) to display a personal map on a system map (step S6.3).

The means for controlling user interface 31 copies geographic coordinates 124, 125, 126, 127 (Figure 19) corresponding to the vertices of each of the personal maps 120 (Figure 19) selected and passes them to the means for managing geographic information 30.

The means for managing geographic information 30 opens a connection to the means for controlling user access 25 and sends a query of the fifth type 173 (Figure 26a) (step S6.5). The query 173 (Figure 26a) is passed on top themeans for managing databases 26, which searches the databases 27, 28, retrieves the relevant data and returns them to the means for controlling user access 25. The means for controlling user access 25 prepares and sends a reply of the fifth type 177 (Figure 26b) to the means for managing geographic information 30 after which the connection is closed (step S6.6). As described earlier, the reply 177 includes map data 178 (Figure 26b) and georeferencing parameters 179 (Figure 26b).

The means for managing geographic information 30 forwards the map data 178 (Figure 26b) to the means for controlling user interface 31 for displaying a map. The means for managing geographic information 30 also converts the geographical coordinates corresponding to the vertices of each of the personal maps selected into graphical coordinates and forwards these to the means for controlling user interface 31 for displaying personal maps on the system map (step S6.7).

At this point, the user is presented with a map on which the outlines of areas are superimposed, each area associated with a personal map 120 (Figure 19). The user, having consulted the map, may now select an area and display a personal map in place of a portion of the system map (step S6.8). Preferably, the user input means 8 (Figure 2) includes a mouse which can be used to select an icon by "clicking" on a screen.

The means for controlling user interface 31 retrieves and displays the selected personal map (step S6.9).

### Displaying personal maps while navigating system maps

Personal maps can be displayed on system maps while the user navigates system maps, as will now be explained.

The user retrieves a system map from the geographic database 27 in a manner described earlier and displays the system map in the browser window 188 (Figure 29).

The user selects a point on the system map 190 (Figure 190). This is preferably done by clicking on a point on the map 190. The means for controlling user interface 31 (Figure 6) sends the map coordinate corresponding to the selected point to the means for managing geographic information 30 for conversion into geographical coordinates. The geographical coordinates are returned to the means for controlling user interface 31 which searches the database 33 to determine whether it falls within the range of a personal map. If the geographical coordinates do fall within the range of a personal map, then the personal map is retrieved and displayed on the system map as described earlier.

### Managing queries from mobile telephones

Referring to Figures 6, 47 and 48, a process flow diagram of a method managing a query addressed to the client computer 1 by a mobile communications device 260, such as a mobile telephone or a device fitted with a mobile telephone module, is shown.

The means for controlling user interface 31 presents a user with a list of types of messages it may accept. This may occur when the user installs the GIS software or if the user selects a configuration menu. The user may define the syntax of one or more of these messages (step S7.1).

The mobile telephone interface 32 receives a short message service (SMS) message from the device 260 (step S7.2). The message syntax is recognised and the message is accepted.

The SMS message is translated and passed on to the means for managing geographic information 30. An SMS event is generated and the SMS message is sent to the means for controlling user interface 31 for notifying the user that an SMS message has been received (step S7.3).

The SMS message includes the identity of the caller. Thus, the means for controlling user interface 31 checks whether the caller is authorised to use the service (step S7.5).

If the caller is not authorised, then the message is refused.

If the caller is authorised, then the means for controlling user interface 31 analyses the SMS message and, if necessary, reformats the message (step S7.5).

The means for controlling user interface 31 checks to see whether the message request can be dealt with by the client computer 2 (step S7.6)

If not, the means for controlling user interface 31 forwards the message to the means for managing geographic information 30 which opens a connection to the means for controller user access 25 and transmits the message as a query of an appropriate type (step S7.7).

The query is passed on to the means for managing databases 26, which searches the databases 27, 28, retrieves the relevant data and returns them to the means for controlling user access 25. The means for controlling user access 25 prepares and sends a reply to the means for managing geographic information 30 after which the connection is closed (step S7.8).

However, the SMS message may relate to data held in database 33 and if this is the case then the client computer can deal with the query itself.

The means for controlling user interface 31 retrieves the relevant information from the database 33 and returns it to the means for managing geographic information 30. The means for managing geographic information 30 compiles a reply (step S7.9).

The reply is forwarded to the mobile telephone interface 28, where an answer SMS message is assembled and transmitted to the mobile communications device 260 (steps S7.10 & S7.11).

The mobile network 261 may be in the form of a GPRS network. This allows Multimedia Message Services (MMS) messages to be used instead of SMS messages.

It will be appreciated that many modifications may be made to the embodiments hereinbefore described. For example, the wireless network interface may be suitable for interfacing with one or more different types of wireless network.

The database 27 may be implemented in a number of different ways, for example using an Oracle™ database.

## Claims

1. A method, in a geographical information system comprising a server computer (2) and at least one client computer (1), the method comprising:
said server computer (2):
providing data (34) for a map (190; 238);
providing data (35) for georeferencing said map data (34);
transmitting said map data (34) and said georeferencing data (35) to a client computer (1); and
said client computer (1):
providing personal data (65; 79; 93; 107; 120) for associating with said map;
providing data (181) for identifying a position to which said personal data is to be associated; and
calculating geographical coordinate data (183) corresponding to said position.

2. A method, in a client computer (1) in a geographical information system, the method comprising:
sending a request (133; 141; 151; 163; 173) to a server computer (2), said request including data (134; 142; 156; 164; 174) for identifying a geographical point or region;
receiving, from said server computer (2), data (34) for a map (190; 238) which includes said geographical point or region;
receiving, from said server computer (2), data (35) for georeferencing said map data (34);
providing personal data (65; 79; 93; 107; 120) for associating with said map;
providing data (181) for identifying a position to which said personal data is to be associated; and
calculating geographical coordinate data (183) corresponding to said position.

3. A method according to claim 1 or 2, wherein said calculating of said geographical coordinate data includes:
calculating geographical coordinate data (183) corresponding to said position using said georeferencing data (35).

4. A method according to any preceding claim, further comprising:
said client computer (1):
storing said personal data (65) and said corresponding geographical coordinate data (183).

5. A method according to any preceding claim, wherein said providing of said identifying data (181) includes:
identifying a point on said map or identifying a region defined by a plurality of points on said map (190; 238).

6. A method according to claim 5, wherein said calculating of said geographical coordinate data (183) includes:
calculating respective geographical coordinate data (183) corresponding to said point or each of said plurality of points.

7. A method according to any preceding claim, wherein said providing of said identifying data (181) includes:
receiving an address from a user; or
determining a position of a pointer on a display selected by a user.

8. A method according to any preceding claim, wherein said providing of said personal data (65) includes:
providing text data (74), audio data (75), video data (77) and/or graphic data (69, 76) or
providing means (74) for pointing to text data, means (75) for pointing to audio data, means (77) for pointing to video data and/or means (69, 76) for pointing to graphic data.

9. A method according to any preceding claim, wherein said providing of said personal data (65) includes:
providing one or more attributes in one or more corresponding data fields (66, 67, 68, 69, 70, 71, 72, 73, 74, 75, 76, 77, 78).

10. A method according to any preceding claim, wherein said providing of said personal data (120) includes:
providing data (128) for a personal map or means (128) for pointing to map data.

11. A method according to any preceding claim, comprising:
said client computer (1):
importing at least some of said personal data (65; 79; 93; 107; 120) from an external archive.

12. A method according to any preceding claim, comprising:
said client computer (1):
importing said position identifying data (181) instead of providing said position identifying data (181) or
importing said geographical coordinate data (183) instead of providing said position identifying data (181) and determining said geographical coordinate data (183).

13. A method according to any preceding claim, further comprising:
said client computer (1):
displaying said map (190; 238; 246) and an icon (239; 247) on said map at the position corresponding to said geographical coordinate data (183).

14. A method, in a client computer (1) in a geographical information system, the method comprising:
sending a request (173) to a server computer (2), said request including data (174) for identifying a geographical point or region;
receiving, from said server computer (2), data (34) for a map (238) which includes said geographical point or region;
receiving data (35), from said server computer (2), for georeferencing said map data (34);
retrieving personal data (65; 79; 93; 107; 120) including data for displaying an icon and geographical coordinate data (183),
displaying said map (190; 238; 246) and said icon (239; 247) on said map at the position corresponding to said geographical coordinate data (183).

15. A method according to claim 12 or 13, further comprising:
said client computer (1):
receiving an instruction to select said icon (247) and
displaying at least part of said user data (65).

16. A method according to any one of claims 12 to 15 comprising:
searching for data items included in one or more sets of user data (65) and
retrieving a set of user data (65) if said set includes said data item.

17. A method, in a client computer (1) in a geographical information system, or a method, in a client computer (1), according to any preceding claim, the method comprising:
providing an itinerary comprising:
receiving at least two sets of geographical coordinate data (183) from a positioning device (227);
sending a request (173) to a server computer (2), said request including said at least two sets of geographical coordinate data (183);
receiving, from said server computer (2), data (34) for a map which includes points corresponding to said at least two sets of geographical coordinate data (183);
receiving, from said server computer (2), data (35) for georeferencing said map data (34);
calculating at least two positions on said map corresponding to said at least two sets of geographical coordinates; and
providing at least two sets of personal data (65) for associating with respective positions on said map.

18. A method, in a client computer (1) in a geographical information system, or a method, in a client computer (1), according to any preceding claim, the method comprising:
reviewing an itinerary comprising:
retrieving at least two sets of personal data (65; 79; 93; 107; 120) for associating with respective points along said itinerary, each set of personal data including respective data for displaying an icon and respective geographical coordinate data (183),
sending a request (173) to a server computer (2), said request including geographical coordinate data (174);
receiving, from said server computer (2), data (34) for a map which includes points corresponding to said geographical coordinate data;
receiving, from said server computer (2), data (35) for georeferencing said map data (34); and
calculating at least two positions on said map corresponding to said at least two sets of geographical coordinates.

19. A method according to claim 17 or 18, further comprising:
displaying said itinerary including said at least two positions on said map corresponding to said itinerary.

20. A method, in a client computer (1) in a geographical information system, or a method, in a client computer (1), according to any preceding claim, the method comprising:
providing personal data (120) for associating with a map, said personal data including data (128) for a personal map;
sending a request (133; 141; 151; 163; 173) for a map to a server computer (2);
receiving, from said server computer (2), data (34) for said map (190; 238);
receiving, from said server computer (2), data (35) for georeferencing said map data (34);
receiving user instructions for defining a region using a plurality of points on said map (190; 238);
calculating a plurality of sets of geographical coordinate data (183) corresponding to respective points on said map; and
assigning said plurality of sets of geographical coordinate data (183) to corresponding points of said personal map.

21. A method, in a client computer (1) in a geographical information system, or a method according to any preceding claim, the method comprising:
retrieving personal data (120) for associating with a map, said personal data including data (128) for a personal map and a plurality of sets of geographical coordinate data (183) assigned to said personal map;
sending a request (133; 141; 151; 163; 173) for a map to a server computer (2);
receiving, from said server computer (2), data (34) for said map (190; 238);
receiving, from said server computer (2), data (35) for georeferencing said map data (34);
calculating a plurality of sets of coordinates on said map corresponding to said plurality of sets of geographical coordinate data (183); and
displaying said personal map on said map at said calculated coordinates.

22. A method, in a client computer (1) in a geographical information system, or a method, in a client computer (1), according to any preceding claim, the method comprising:
receiving a request for data from a mobile communications device;
determining whether said data is stored at said client computer; and
if said data is stored at said client computer, then retrieving said data and transmitting said data to mobile communications device;
if said data is not stored at said client computer, transmitting the request to a server computer, receiving said data from said server computer and transmitting said data to said mobile communications device.

23. A method, in a server computer (2) in a geographical information system, the method comprising:
receiving a request (133; 141; 151; 163; 173) from a client computer (1);
examining said request so as to identify a geographic point or region (134, 142, 156, 164);
providing data (34) for a map in respect of said geographical point or region;
providing data (35) for georeferencing said map data (34); and
transmitting said map data (34) and said georeferencing data (35) from said server computer (2) to said client computer (1).

24. A computer program including instructions for carrying the method according to any preceding claim.

25. A record medium embodying, a computer memory storing, a read-only memory embodying or a carrier signal carrying a computer program according to claim 24.

26. Apparatus configured to perform the method according to any one of claims 1 to 23.

27. A geographical information system comprising a server computer (2) and at least one client computer (1),
said server computer (2) being configured to provide data (34) for a map and to provide data (35) for georeferencing said map data (34) and to transmit said map data (34) and said georeferencing data (35) to a client computer (1); and
said client computer (1) being configured to provide personal data (65) for associating with said map and to provide data (181) for identifying a position to which said associating data is to be associated with said map and to determine geographical coordinate data (183) corresponding to said position.

28. Apparatus (1) comprising:
means (30) for preparing a request (133; 141; 151; 163; 173), said request including data (134; 142; 156; 164; 174) for identifying a geographical point or region;
means (30) for transmitting said request to a server computer (2),
means (30) for receiving from said server computer (2), data (34) for a map (190; 238) which includes said geographical point or region and data (35) for georeferencing said map data (34);
means (31) providing personal data (65; 79; 93; 107; 120) for associating with said map;
means (31) for providing data (181) for identifying a position to which said personal data is to be associated; and
means (30) for calculating geographical coordinate data (183) corresponding to said position.
